(19) **Europäisches Patentamt / European Patent Office / Office européen des brevets**

(11) **EP 4 320 420 B1**

(12) **EUROPEAN PATENT SPECIFICATION**

(45) Date of publication and mention
of the grant of the patent:
**01.04.2026 Bulletin 2026/14**

(21) Application number: **21719079.2**

(22) Date of filing: **09.04.2021**

(51) International Patent Classification (IPC):
**G01N 1/22** *(2006.01)* **G01N 15/02** *(2024.01)*
**G01N 15/06** *(2024.01)*

(52) Cooperative Patent Classification (CPC):
**G01N 1/2273; G01N 15/0205; G01N 15/06;**
G01N 15/075; G01N 2015/0046

(86) International application number:
**PCT/EP2021/059323**

(87) International publication number:
**WO 2022/214198 (13.10.2022 Gazette 2022/41)**

(54) **DEALING WITH FOG AND CONTAMINATIONS IN ENVIRONMENTAL SENSOR DEVICES**

BEHANDLUNG VON NEBEL UND VERUNREINIGUNGEN IN UMWELTSENSORVORRICHTUNGEN

TRAITEMENT DU BROUILLARD ET DES CONTAMINATIONS DANS LES DISPOSITIFS CAPTEURS ENVIRONNEMENTAUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**14.02.2024 Bulletin 2024/07**

(73) Proprietor: **Sensirion AG**
**8712 Stäfa (CH)**

(72) Inventors:
- **NIEDERBERGER, Dominik**
  **8706 Meilen (CH)**
- **STUDER, Nico**
  **8406 Winterthur (CH)**
- **RÜFFER, Daniel**
  **8706 Meilen (CH)**
- **LEUENBERGER, Dominik**
  **8005 Zürich (CH)**
- **GÜTLE, Frank**
  **8713 Uerikon (CH)**

- **KRÄHENBÜHL, Thomas**
  **8055 Zürich (CH)**
- **MRCARICA, Zeljko**
  **8049 Zürich (CH)**
- **HOPPENAU, Lukas**
  **8006 Zürich (CH)**
- **KOSTNER, Stefan**
  **8712 Stäfa (CH)**

(74) Representative: **Detken, Andreas**
**Isler & Pedrazzini AG**
**Giesshübelstrasse 45**
**Postfach 1772**
**8027 Zürich (CH)**

(56) References cited:
WO-A1-2019/115689    WO-A1-2021/032875
WO-A2-2018/100209    CN-B- 105 518 435
US-A1- 2013 125 624   US-A1- 2020 400 544
US-B2- 8 561 486      US-B2- 9 138 663

**EP 4 320 420 B1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a sensor device comprising at least one environmental sensor for determining at least one environmental parameter associated with a sensor gas flow through the sensor device, to a gas flow system comprising such a sensor device, and to a method of determining at least one environmental parameter associated with a sensor gas flow. The environmental sensor may, in particular, be a particulate matter sensor for determining at least one property of particulate matter in the sensor gas flow.

PRIOR ART

In many situations, it is desired to determine one or more properties of particulate matter (PM) in a gas, e.g. a number or mass concentration in a certain size range or a size or mass distribution of PM. Applications include air quality monitoring of environmental air outdoors and HVAC systems in buildings and vehicles.

From the prior art, various devices for detecting and characterizing PM are known. An example is disclosed in WO 2008/140816 A1. A fan creates an air flow through a flow channel. A light source shines light into the flow channel. The light is scattered by particles entrained in the air flow. The scattered light is registered by a photodetector. The photodetector converts the scattered light into an electrical signal. The electrical signal is typically a pulse whose amplitude correlates with particle size and whose duration correlates with the transit time of the particle through the light beam. By counting the pulses, a number concentration of the PM may be determined. By analyzing the intensities of the pulses, a size distribution of the PM may be determined. By analyzing the duration of the pulses, the flow rate of the air flow may be calculated. Another example of a sensor device for optically detecting PM is disclosed in WO 2017/054098 A1.

Sometimes, PM sensors are used in environments in which fog may occur. The presence of fog may negatively affect the accuracy of a PM sensor. Fog is composed of microscopic water droplets suspended in the air. As PM sensors typically are not able to distinguish between solid particles and liquid droplets, fog may be mistaken for an increased PM load unless measures are taken to prevent the fog from reaching the PM sensor. In the prior art, measures have therefore been taken to evaporate all droplets before they can reach the PM sensor. However, this may require much energy, making this approach unsuitable for low-energy applications, as in solar- or battery-powered devices.

Another typical problem with PM sensors is contamination. Particles in the air flow tend to precipitate on the light source and the detector and thereby degrade the performance of the PM sensor. WO 2018/100209 A2 discloses various measures that may reduce contamination of the optical components. However, it would be desirable to prevent the most problematic sources of contamination from entering the PM sensor in the first place. This includes relatively large particles, e.g., pollen, fragments of leaves, insect wings, hairs etc., having a size that is typically far beyond the size range of interest, e.g., above 10 $\mu$m. Specifically, in gas flow systems comprising a duct, such particles often adhere to the duct wall, where they slowly move under the action of the gas flow. In the prior art, it has been proposed to provide sensor devices with impactors to separate large particles from small particles so as to prevent large particles from reaching the optical components. However, the available space in the impactor may fill up over time, requiring cleaning or replacement of the impactor. It would therefore be desirable to design a gas flow system in such a manner that large particles are prevented from entering the PM sensor device in the first place.

WO 2019/115689 A1 discloses a particulate matter sensor system for sensing particulate matter in a fluid that includes a substrate and a cover disposed on the substrate. The cover defines at least a portion of a flow path through the microfluidic system. The sensor system includes a particulate matter sensor disposed in an interior space between the cover and the substrate. The particulate matter sensor includes an integrated sensor device electrically connected to the substrate. The flow path is defined through the particulate matter sensor. The sensor system includes a fluid circulation device disposed in the interior space between the cover and the substrate and configured to cause fluid to flow along the flow path through the microfluidic system.

Similar problems also exist for other types of environmental sensors. For instance, gas concentration sensors may also show a cross-correlation to fog and may be sensitive to contamination by large particles.

SUMMARY OF THE INVENTION

In a first aspect, it is an object of the present invention to provide a sensor device comprising an environmental sensor, the sensor device exhibiting a reduced sensitivity to fog or other kinds of evaporable droplets in the sensor gas flow.

This object is achieved by a sensor device according to claim 1, a sensor device according to claim 5, a method according to claim 11 and a method according to claim 12. Further embodiments of the invention are laid down in the dependent claims.

Accordingly, a sensor device is provided, the sensor device comprising at least one environmental sensor for determining at least one environmental parameter associated with a sensor gas flow through the sensor device. The sensor device is configured to preheat at least a portion of the sensor gas flow upstream of the environmental sensor, i.e., at a location where the sensor gas flow has not yet passed the environmental sensor, using waste heat generated by the environmental sensor itself. Waste heat generated by another sensor that is comprised in the sensor device upstream of the environmental sensor or from other electrically operated components of the sensor device may be used for preheating as well, for instance, waste heat from a flow-generating device such as a fan and/or from a control device for controlling operation of the sensor device. Essentially, waste heat generated by any component of the sensor device may be used. In this manner, the number and/or size of evaporable droplets in the sensor gas flow is reduced before the sensor gas flow arrives at the environmental sensor, thereby reducing potential adverse effects of the droplets on the operation and/or accuracy of the environmental sensor. Since waste heat is used for preheating, a separate heating element may not be required. However, the present invention does not exclude that an additional separate heating element is provided to additionally assist with preheating.

In the context of the present disclosure, the term "environmental sensor" is to be understood as relating to a sensor that is capable of determining at least one environmental parameter of the sensor gas flow. The term "environmental parameter" is to be understood as relating to any parameter that may characterize the composition of the sensor gas flow. In particular, the environmental sensor may be a particulate matter (PM) sensor, and the at least one environmental parameter may accordingly be at least one parameter that characterizes particulate matter in the gas flow, such as a number and/or mass concentration of the particulate matter, possibly restricted to at least one size or mass range (e.g., a concentration of PM that is smaller than a certain cutoff), and/or at least one parameter that is indicative of a size or mass distribution of the particulate matter. The term "particulate matter" (PM) is to be understood as relating to microscopic solid particles and/or liquid droplets suspended in the gas flow. In particular, a PM sensor may be an optical PM sensor, comprising a light source for shining light into the flow channel and a photodetector for registering light that has been scattered by particles entrained in the sensor gas flow. The photodetector may output an electrical signal that is indicative of the scattered light. For instance, the photodetector signal may comprise pulses corresponding to single scattering events in a comparatively small detection volume defined by the light, the amplitude of the pulses correlating with particle size and their duration correlating with the transit time of the particle through the detection volume, or it may be a DC signal whose amplitude correlates with the intensity of the scattered light in a comparatively large detection volume, thus directly correlating with the PM concentration in the detection volume. In other embodiments, the environmental sensor may be a gas concentration sensor, and the environmental parameter may be a concentration of one or more types of gas in the gas flow, in particular, a concentration of at least one of water vapor, carbon dioxide ($CO_2$), carbon monoxide (CO), nitrogen oxides ($NO_x$), and one or more volatile organic compounds (VOC). The sensor gas flow may be an air flow or a flow of any other gas, e.g., a fuel gas or a medical gas.

The sensor device comprises a heat exchanger for exchanging heat between at least a first portion of the sensor gas flow upstream of the environmental sensor and at least a second portion of the sensor gas flow downstream of the environmental sensor. In this manner, the first portion of the sensor gas flow may be preheated using waste heat generated by the environmental sensor itself and possibly by other components of the sensor device that contribute to heating the second portion of the sensor gas flow before it enters the heat exchanger.

The terms "at least a first portion of the sensor gas flow" and "at least a second portion of the sensor gas flow" are to be understood as follows: The heat exchanger may be configured to preheat the entire sensor gas flow upstream of the environmental sensor by transferring heat from the entire sensor gas flow downstream of the environmental sensor. However, it is also conceivable that not the entire sensor gas flow upstream of the environmental sensor is preheated. For instance, if the sensor gas flow is formed by combining a core flow comprising the gas of interest and a sheath flow for protecting the optical components from contamination, it may be sufficient to preheat only the core flow or only the sheath flow. Accordingly, it is conceivable that only a first portion of the sensor gas flow upstream of the environmental sensor is preheated. In a similar spirit, it is also conceivable that not all of the sensor gas flow downstream of the environmental sensor is fed to the heat exchanger. For instance, a portion of the sensor gas flow may be diverted to some additional sensor elements, may be used for some other purpose, or may simply be lost through leaks of the sensor device. Accordingly, it is conceivable that only a second portion of the sensor gas flow downstream of the environmental sensor is fed to the heat exchanger. It is further conceivable that the sensor gas flow downstream of the environmental sensor or the second portion thereof is combined with another gas flow, e.g., a gas flow from another sensor in the sensor device, before being passed to the heat exchanger.

Many designs of heat exchangers are known, and the present invention is not limited to any particular design. In some embodiments, the heat exchanger may have a crossflow design, where the flow to be heated flows in a direction that is transverse to the flow direction of the gas from which heat is to be extracted. In other embodiments, the heat exchanger may have a counterflow design, wherein the gas flows between which heat is transferred have opposite flow directions. In a particularly simple configuration, the heat exchanger may have a concentric tube design, wherein the heat exchanger comprises an inner tube which is surrounded by an outer tube, leaving an annular space between the inner and outer tubes. The inner tube may then carry the flow that is to be heated, and the outer tube may carry the flow whose heat is to be extracted. The term "concentric tube design" is to be understood as not strictly requiring the tubes to be concentric in a mathematical sense; it suffices that the outer tube surrounds the inner tube.

In some embodiments, heat is exchanged between an inlet gas flow into the sensor device and an outlet gas flow that exits the sensor device. Accordingly, the sensor device may comprise:

an inlet for allowing an inlet gas flow to enter the sensor device, the inlet gas flow forming at least a portion of the sensor gas flow upstream of the environmental sensor; and
an outlet for allowing an outlet gas flow to exit the sensor device, the outlet gas flow comprising at least a portion of the sensor gas flow downstream of the environmental sensor.

The heat exchanger may then be configured to exchange heat between the inlet gas flow and the outlet gas flow. In a particularly simple, yet effective concentric tube design, the heat exchanger may comprise an inlet tubing section arranged between the inlet and the environmental sensor and an outlet tubing section arranged between the environmental sensor and the outlet, the outlet tubing section surrounding the inlet tubing section.

For generating the sensor gas flow, the sensor device may comprise a flow-generating device, e.g., a fan or a heating device that causes convective flow in the sensor device. Waste heat from the flow-generating device may contribute to the heating of the second portion of the sensor gas flow.

If the environmental sensor is a particulate matter (PM) sensor, fog may be detected by monitoring sensor signals of the PM sensor, in particular, sensor signals that are indicative of a number or mass concentration of PM and/or of its size or mass distribution, while the flow rate through the sensor device is varied. Since at higher flow rates the droplets spend less time in the zone where the sensor gas flow is preheated (in particular, in the heat exchanger), and since waste heat is carried away by a larger gas volume per unit of time at higher flow rates, leading to a lower temperature rise of the sensor gas flow due to the waste heat, less droplets are expected to be evaporated upstream of the PM sensor at higher flow rates. Therefore the sensor signals will depend on the flow rate more strongly when droplets are present than when droplets are absent. In this manner, the presence of droplets may be detected. A compensated particulate matter signal may be derived, which is compensated for the effect of droplets.

Accordingly, the sensor device may comprise:

a control device configured to receive sensor signals from the particulate matter sensor, to operate the flow-generating device to cause a variation of a flow rate of the sensor gas flow, to determine a response of the sensor signals to the variation of the flow rate, and to derive an output signal using said response of the sensor signals, the output signal comprising at least one of:

a droplet indicator signal that is indicative of at least one property of evaporable droplets in the sensor gas flow, in particular, indicative of at least one of a presence, a number concentration, a mass concentration and a size distribution of said evaporable droplets; and
a compensated particulate matter signal that is indicative of at least one property of particulate matter excluding evaporable droplets in the sensor gas flow, in particular, indicative of at least one of a number concentration, a mass concentration and a size distribution of said particulate matter excluding evaporable droplets.

According to a further aspect of the invention, the sensor device comprises not only a single environmental sensor, but two or more environmental sensors, and use waste heat from one or more of these environmental sensors and possibly other components of the sensor device to preheat the sensor gas flow for the other environmental sensor. In particular, the sensor device comprises:

a first environmental sensor for determining at least one environmental parameter associated with a first sensor gas flow through the sensor device; and
a second environmental sensor for determining at least one environmental parameter associated with a second sensor gas flow through the sensor device, the second environmental sensor being arranged downstream of the first environmental sensor such that the second sensor gas flow comprises at least a portion of the first sensor gas flow downstream of the first environmental sensor.

In this manner, the second sensor gas flow is additionally preheated using waste heat generated by the first environmental sensor and any other components upstream of the second environmental sensor.

The terms "first sensor gas flow" and "second sensor gas flow" are to be understood as follows: The "first sensor gas flow" is the gas flow on which the first environmental sensor carries out its measurements for determining the first environmental parameter. The "second sensor gas flow" is the gas flow on which the second environmental sensor carries out its measurements for determining the second environmental parameter. These gas flows are preferably identical, i.e.,

the entire first sensor gas flow downstream of the first environmental sensor may be fed to the second environmental sensor. In this case, it is possible to define a single "sensor gas flow" without distinguishing between a "first" and a "second" sensor gas flow. However, it is also conceivable that the second sensor gas flow comprises only a portion of the first sensor gas flow, another portion being diverted from the first sensor gas flow to some other destination or being lost by leaks, or that an additional gas flow, e.g., a sheath flow, is added to the first sensor gas flows downstream of the first environmental sensor and upstream of the second environmental sensor. In such situations, it may be necessary to distinguish between the first and second sensor gas flows.

It goes without saying that more than one environmental sensor may be present upstream of the second environmental sensor. Accordingly, the second sensor gas flow may be preheated using waste heat generated by more than only one environmental sensor and its associated components.

In embodiments with two or more environmental sensors, in addition or as an alternative to using the waste heat of a first environmental sensor for preheating, also the waste heat of the second environmental sensor is used for preheating. In particular, these two sources of waste heat may be combined for preheating. To this end, the sensor device comprises a heat exchanger for exchanging heat between at least a first portion of the second sensor gas flow upstream of the second environmental sensor and at least a second portion of the second sensor gas flow downstream of the second environmental sensor. In particular, the heat exchanger may be configured to preheat the first portion of the second sensor gas flow downstream of the first environmental sensor, but still upstream of the second environmental sensor. In other embodiments, the heat exchanger may be configured to preheat at least a portion of the first sensor gas flow upstream of the first environmental sensor. Since the second sensor gas flow comprises at least a portion of the first sensor gas flow, this causes the second sensor gas flow to be preheated as well.

Both environmental sensors are preferably configured to determine the same type of environmental parameter. In some embodiments, the first environmental sensor is a first particulate matter (PM) sensor for detecting particulate matter in the first sensor gas flow, and the second environmental sensor is a second PM sensor for detecting particulate matter in the second sensor gas flow. In other embodiments, the first and second environmental sensors may be, e.g., gas concentration sensors for detecting a concentration of the same type of gas.

The sensor device may comprise a control device configured to receive first sensor signals from the first environmental sensor (in particular, from the first PM sensor) and second sensor signals from the second environmental sensor (in particular, from the second PM sensor) and to derive an output signal using the first and second sensor signals. In particular, the first and second sensor signals may be indicative of a number or mass concentration of PM in the respective gas flow, possibly restricted to at least one size or mass range of the PM (e.g., PM concentration below a certain size cutoff). The output signal may comprise at least one of:

a droplet indicator signal that is indicative of at least one property of evaporable droplets in the first and/or second sensor gas flows, in particular, indicative of at least one of a presence, a number concentration, a mass concentration and a size distribution of said evaporable droplets; and
a compensated particulate matter signal that is indicative of at least one property of particulate matter excluding evaporable droplets in the first and/or second sensor gas flows, in particular, indicative of at least one of a number concentration, a mass concentration and a size or mass distribution of said particulate matter excluding evaporable droplets.

In particular, the control device may be configured to form a (possibly weighted) difference of concentration values obtained from the first and second sensor signals to derive the droplet indicator signal and/or to form a (possibly weighted) sum of such concentration values to derive the compensated particulate matter signal.

In more sophisticated embodiments, the first and second sensor signals may be indicative of a size or mass distribution of the particulate matter, and accordingly also the droplet indicator signal and/or the compensated particulate matter signal may be indicative of a size or mass distribution.

The sensor device may comprise at least one flow-generating device configured to generate the first and second sensor gas flows. In particular, a single flow-generating device may be provided for generating both the first and second sensor gas flows. Waste heat of the at least one flow-generating device may optionally be used for additionally preheating the second sensor gas flow.

The control device may be configured to operate the at least one flow-generating device to cause a flow rate variation of at least one of the first and second sensor gas flows and to determine a response of the first and/or second sensor signals to the flow rate variation, and the control device may be configured to take said response to the flow rate variation into account when deriving the output signal. For instance, as discussed above, increasing the flow rate may cause less efficient preheating, which in turn may cause an increase in the difference between concentration values obtained from the first and second PM signals in the presence of droplets. The dependence of this difference on the flow rate may provide important information on the presence, concentration and/or size or mass distribution of the droplets.

In a similar spirit, the sensor device may comprise an additional heating device configured to preheat the second sensor gas flow upstream of the second particulate matter sensor using externally supplied power. Preferably, the second heating device is arranged downstream of the first particulate matter sensor. The control device may be configured to operate the heating device to cause a variation of heating power and to determine a response of the first and/or second sensor signals to the variation of heating power, and the control device may be configured to take said response to the variation of heating power into account when deriving the output signal. For instance, the control device may be configured to determine a heating power threshold above which the difference between the first and second PM signals does not change any more. This heating power threshold may provide important information on the concentration and/or size or mass distribution of the droplets.

In preferred embodiments, the first particulate matter sensor is an optical particulate matter sensor comprising a first light source and a first light detector, and the second particulate matter sensor is an optical particulate matter sensor comprising a second light source and a second light detector.

In some embodiments, the first and second light sources and, optionally, the first and second light detectors may be mounted on a common circuit board, in particular, on opposite sides thereof, and the circuit board may be arranged such that the second sensor gas flow is in thermal contact with the circuit board downstream of the first particulate matter sensor and upstream of the second particulate matter sensor. Thermal contact may be established, e.g., by establishing direct, physical contact between the second sensor gas flow and the circuit board, or by flowing the second sensor gas flow over a heat sink that is attached to the circuit board, the heat sink having larger surface area than the surface area portion of the circuit board to which it is attached. Preferably, the second sensor gas flow is brought into thermal contact with both a first side and a second side of the circuit board, wherein the second sensor gas flow may have a different flow direction while being in thermal contact with the second side as compared to the flow direction while being in thermal contact with the first side. The circuit board thus acts as a heat exchanger for heating the second sensor gas flow upstream of the second PM sensor, using the waste heat of both particulate matter sensors.

In some embodiments, the sensor device may comprise a valve that is movable between a first and a second state. In the first state, the valve feeds at least a portion of the first sensor gas flow downstream of the first environmental sensor to the second environmental sensor, while in the second state, the valve disconnects the first and second sensor gas flows from one another, enabling the first and second environmental sensors to be operated independently.

In a second aspect, which is not part of the claimed invention, the present disclosure provides a sensor device comprising:

a particulate matter sensor for detecting particulate matter in a sensor gas flow through the sensor device;
a heating device configured to preheat the sensor gas flow upstream of the particulate matter sensor; and
a control device configured to receive sensor signals from the particulate matter sensor (in particular, sensor signals that are indicative of a number or mass concentration of the particulate matter, possibly restricted to at least one size or mass range, and/or sensor signals that are indicative of size or mass distribution), to operate the heating device to cause a variation of heating power, to determine a response of the sensor signals to the variation of heating power, and to derive an output signal using said response of the sensor signals,
the output signal comprising at least one of:

a droplet indicator signal that is indicative of at least one property of evaporable droplets in the sensor gas flow, in particular, indicative of at least one of a presence, a number concentration, a mass concentration and a size or mass distribution of said evaporable droplets; and
a compensated particulate matter signal that is indicative of at least one property of particulate matter excluding evaporable droplets in the sensor gas flow, in particular, indicative of at least one of a number concentration, a mass concentration and a size or mass distribution of said particulate matter excluding evaporable droplets.

According to the second aspect, the idea of varying the heating power of a heating device for preheating the sensor gas flow and of determining a response of the PM signal to the heating power variation in order to derive the output signal is not restricted to situations where two PM sensors are present, but may also be used in a sensor device that comprises only a single PM sensor. According to the second aspect, it is not required that waste heat of this PM sensor is used for preheating.

The sensor device of the first and second aspects may comprise at least one auxiliary sensor, and the control device may be configured to receive at least one auxiliary signal from the at least one auxiliary sensor and to take the at least one auxiliary signal into account when deriving the output signal. The at least one auxiliary sensor may comprising at least one of:

a temperature sensor for determining a temperature signal for the (first and/or second) sensor gas flow;
a humidity sensor for determining a humidity signal for the (first and/or second) sensor gas flow; and
a flow rate sensor for determining a flow rate signal for the (first and/or second) sensor gas flow.

Temperature, humidity and flow rate may all be used to compute a more precise value of the fog indicator signal and/or of the compensated PM signal. For instance, the higher the difference between the temperatures of the first and second sensor gas flows, or the higher the absolute temperature of the second sensor gas flow, the higher the fraction of droplets that is likely to have been evaporated between the first and second PM sensors. Taking the temperature signals into account may therefore improve computation of the fog indicator signal and/or of the compensated PM signal. Likewise, also humidity and flow rate signals for the first and second sensor gas flows may be used to derive a more precise value of the fog indicator signal and/or of the compensated PM signal. For instance, increased humidity of the second sensor gas flow may indicate that droplets have been evaporated between the first and second PM sensors.

The sensor device of the first and second aspects may comprise a heat-insulating housing, the at least one environmental sensor being arranged inside the housing. The housing preferably comprises at least one housing wall section made of a material having a thermal conductivity of less than 0.2 W/(m*K), said housing wall section preferably defining at least 80%, more preferably at least 90%, of the surface area of the housing, most preferably essentially the entire surface area except necessary holes for the inlet, outlet and wiring. In this manner, it is ensured that as little as possible of the available heat for preheating the sensor gas flow (waste heat and/or heat generated by a heating device) is lost.

In a third aspect, which is not part of the claimed invention, the present disclosure addresses the problem of contamination by comparatively large particles such as pollen, fragments of leaves, insect wings, hairs etc., moving along a duct wall. According to the third aspect, the present disclosure provides a gas flow system comprising:

a duct for guiding a duct gas flow along a duct direction; and
a sensor device in fluidic communication with the duct, the sensor device comprising at least one environmental sensor for determining at least one environmental parameter associated with the duct gas flow, in particular, a sensor device according to the first or second aspect,
the sensor device comprising:

an inlet for allowing an inlet gas flow to enter the sensor device from the duct, the inlet gas flow thus being sampled from the duct gas flow; and
an outlet for allowing an outlet gas flow to exit the sensor device into the duct,
wherein the inlet and the outlet are arranged in a duct wall in such a manner that the outlet gas flow forms a flow barrier that prevents particles that are carried along with the duct gas flow along the duct wall from entering the sensor device through the inlet.

By creating a flow barrier using the outlet gas flow, large particles that slowly migrate along the duct wall are deflected away from the inlet and are thus prevented from entering the sensor device.

In order to create the flow barrier, the outlet preferably opens out into the duct in such a manner that at least a portion of the outlet gas flow enters the duct upstream of the inlet with respect to the duct gas flow, said portion of the outlet gas flow having a flow component perpendicular to the duct direction.

In particular, the outlet may radially surround the inlet with respect to the inlet flow direction. To this end, the inlet may be formed by an inlet tubing section, and the outlet may be formed by an outlet tubing section that surrounds the inlet tubing section, an annular space being formed between the inlet tubing section and the outlet tubing section. The inlet tubing section may then carry the inlet gas flow, and the annular space may carry the outlet gas flow. In particular, the inlet tubing section and the outlet tubing section may form a heat exchanger for preheating the inlet gas flow by heat transfer from the outlet gas flow, as discussed in more detail above in connection with the first aspect of the invention.

The outlet may surround the inlet in such a manner that the outlet gas flow has a flow component perpendicular to the duct direction, said component having a velocity maximum upstream of the inlet with respect to the duct gas flow. To this end, the arrangement of the inlet and the outlet may be non-symmetric, the annular space between the inlet and the outlet being narrower upstream of the inlet than downstream of the inlet, whereby the flow component perpendicular to the duct direction will have higher velocity upstream of the inlet than downstream of the inlet.

Formation of the flow barrier may be improved by configuring the outlet to form a nozzle, such that the nozzle accelerates the outlet gas flow along a direction that has an appreciable component perpendicular to the duct direction.

In some embodiments, the inlet is formed by inlet tubing that protrudes into the duct beyond the outlet (or, to be more precise, beyond an open end of outlet tubing, the open end defining the outlet), in particular, along a direction that is transverse to the duct direction, i.e., along a direction that is perpendicular to the duct direction or has an appreciable component perpendicular to the duct direction. Thereby, particles that travel along the duct wall are less likely to enter the inlet. The open end of the outlet tubing may be flush with the duct wall, or it may also protrude into the duct.

The gas flow system may additionally comprise a deflection element arranged in the duct, the deflection element being configured to direct particles moving along the duct wall away from the inlet. The deflection element may deflect the particles in at least one lateral direction in a plane that is parallel to the flow direction of the duct flow and perpendicular to the flow direction of the outlet gas flow, and/or in a radial direction with respect to the duct flow, away from the duct wall toward the interior of the duct.

For ensuring efficient deflection of particles by the flow barrier, it may be desirable to operate the flow-generating device in such a manner that a ratio of the flow velocity of the outlet gas flow and the flow velocity of the duct flow is kept essentially constant, or that the flow velocity of the outlet gas flow at least exhibits a positive correlation with the flow velocity of the duct flow. To this end, the gas flow system may comprise a duct gas flow sensor for determining a flow rate or flow velocity of the duct gas flow, and the sensor device may comprise:

a flow-generating device for generating the outlet gas flow, and
a control device configured to receive a duct gas flow signal from the duct gas flow sensor and to operate the flow-generating device in such a manner that the outlet gas flow has a flow velocity that correlates with a flow velocity of the duct gas flow.

In a fourth aspect, the present invention provides a method for determining at least one environmental parameter associated with a sensor gas flow using a sensor device comprising at least one environmental sensor. The sensor device is preferably a sensor device according to the first aspect of the present invention. The method comprises:

preheating the sensor gas flow upstream of the environmental sensor; and
exposing the environmental sensor to the preheated sensor gas flow,
wherein the sensor gas flow is preheated using waste heat generated by the environmental sensor itself. Optionally, the sensor gas flow may be additionally preheated by another sensor that is comprised in the sensor device upstream of the environmental sensor.

As discussed above, preheating comprises exchanging heat between at least a first portion of the sensor gas flow upstream of the environmental sensor and at least a second portion of the sensor gas flow downstream of the environmental sensor, such that the sensor gas flow is preheated using waste heat generated by the environmental sensor itself.

As discussed above, the environmental sensor may be a particulate matter sensor, and the environmental parameter may accordingly be at least one parameter associated with particulate matter in the sensor gas flow.

As discussed above, the method may comprise:

receiving sensor signals from the environmental sensor;
causing a variation of a flow rate of the sensor gas flow;
determining a response of the sensor signals to the variation of the flow rate; and
deriving an output signal using said response of the sensor signals, the output signal comprising at least one of:

a droplet indicator signal that is indicative of at least one property of evaporable droplets in the sensor gas flow, in particular, indicative of at least one of a presence, a number concentration, a mass concentration and a size or mass distribution of said evaporable droplets; and
a compensated particulate matter signal that is indicative of at least one property of particulate matter excluding evaporable droplets in the sensor gas flow, in particular, indicative of at least one of a number concentration, a mass concentration and a size or mass distribution of said particulate matter excluding evaporable droplets.

As discussed above, in some embodiments the sensor device comprises:

a first environmental sensor for determining at least one environmental parameter associated with a first sensor gas flow through the sensor device; and
a second environmental sensor for determining at least one environmental parameter associated with a second sensor gas flow through the sensor device.

The method then comprises feeding at least a portion of the first sensor gas flow to the second environmental sensor such that the second sensor gas flow comprises at least a portion of the first sensor gas flow downstream of the first environmental sensor, whereby the second sensor gas flow is preheated using waste heat generated by the first environmental sensor.

The method comprises exchanging heat between at least a first portion of the second sensor gas flow upstream of the second environmental sensor and at least a second portion of the second sensor gas flow downstream of the second environmental sensor, whereby the second sensor gas flow is additionally preheated using waste heat generated by the second environmental sensor.

The first and second environmental sensor may be particulate matter sensors for detecting particulate matter in the first sensor gas flow. The method may comprise:

receiving first sensor signals from the first environmental sensor;
receiving second sensor signals from the second environmental sensor; and
deriving an output signal using the first and second sensor signals, the output signal comprising at least one of:

a droplet indicator signal that is indicative of at least one property of evaporable droplets in the first and/or second sensor gas flows, in particular, indicative of at least one of a presence, a number concentration, a mass concentration and a size or mass distribution of said evaporable droplets; and
a compensated particulate matter signal that is indicative of at least one property of particulate matter excluding evaporable droplets in the first and/or second sensor gas flows, in particular, indicative of at least one of a number concentration, a mass concentration and a size or mass distribution of said particulate matter excluding evaporable droplets.

In some embodiments, the method may comprise:

receiving at least one auxiliary signal from at least one auxiliary sensor; and
taking the at least one auxiliary signal into account when deriving the output signal,
the at least one auxiliary signal comprising at least one of a temperature signal, a humidity signal, and a flow rate signal.

In some embodiments, the method may comprise:

causing a flow rate variation of at least one of the first and second sensor gas flows;
determining a response of the first and/or second particulate matter signals to the flow rate variation; and
taking said response to the flow rate variation into account when deriving the output signal.

In some embodiments, the method may comprise:

applying a heating power to the second sensor gas flow to heat the second sensor gas flow upstream of the second particulate matter sensor;
causing a variation of the heating power;
determining a response of the second particulate matter signals to the variation of the heating power; and
taking said response to the variation of the heating power into account when deriving the output signal.

In a fifth aspect, which is not part of the claimed invention, the present disclosure provides a method for detecting particulate matter in a sensor gas flow using a sensor device comprising a particulate matter sensor. The sensor device is preferably a sensor device according to the second aspect of the present disclosure. The method comprises:

receiving a particulate matter signal from the particulate matter sensor;
applying a heating power to the sensor gas flow to heat the sensor gas flow upstream of the particulate matter sensor;
causing a variation of the heating power;
determining a response of the particulate matter signal to the variation of heating power; and
deriving an output signal using the particulate matter signal, the output signal comprising at least one of:

a droplet indicator signal that is indicative of at least one property of evaporable droplets in the sensor gas flow, in particular, indicative of at least one of a presence, a number concentration, a mass concentration and a size or mass distribution of said evaporable droplets; and
a compensated particulate matter signal that is indicative of at least one property of particulate matter excluding evaporable droplets in the sensor gas flow, in particular, indicative of at least one of a number concentration, a mass concentration and a size or mass distribution of said particulate matter excluding evaporable droplets.

BRIEF DESCRIPTION OF THE DRAWINGS

Preferred embodiments of the invention are described in the following with reference to the drawings, which are provided for illustrating the present preferred embodiments of the invention and not for limiting the same. In the drawings,

Fig. 1 shows a sensor device according to a first embodiment;

Fig. 2 shows a sensor device according to an example that is not part of the claimed invention;

Fig. 3 shows a sensor device according to an example that is not part of the claimed invention;

Fig. 4 shows a sensor device according to an example that is not part of the claimed invention;

Fig. 5 shows a schematic diagram illustrating a dependence of a difference signal upon heating power;

Fig. 6 shows a sensor device according to a second embodiment;

Fig. 7 shows a sensor device according to a third embodiment;

Fig. 8 shows a sensor device according to an example that is not part of the claimed invention;

Fig. 9 shows a sensor device according to an example that is not part of the claimed invention;

Fig. 10 shows a sensor device according to a fourth embodiment;

Fig. 11 shows a gas flow system comprising a sensor device attached to a duct;

Figs. 12-17 show exemplary configurations of the inlet and outlet of the sensor device in Fig. 11;

Figs. 18A and 18B show a configuration of the inlet and outlet together with a deflector element;

Figs 19-20 show further configurations of the inlet and outlet;

Figs. 21 and 22 schematically show particle trajectories in a duct;

Fig. 23 shows a highly schematic block diagram of an exemplary control device; and

Fig. 24 shows a flow diagram illustrating a possible method of operating a sensor device.

In the drawings, components having the same or similar function are always designated by the same reference signs, unless indicated otherwise.

DESCRIPTION OF PREFERRED EMBODIMENTS

First embodiment

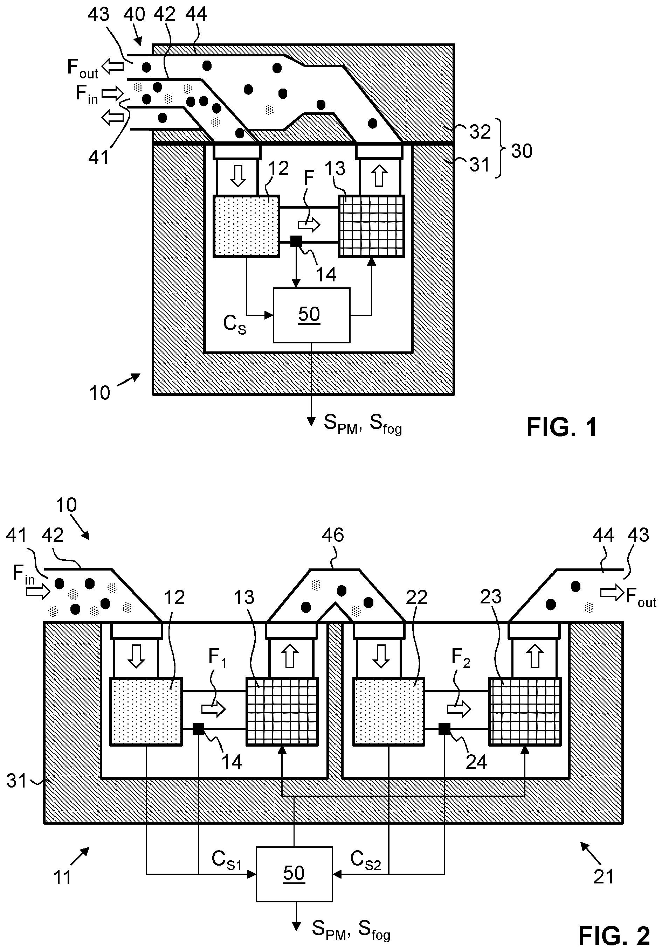

Fig. 1 shows, in a highly schematic manner, a sensor device 10 according to a first embodiment of the present invention. The sensor device comprises an optical PM sensor 12, a fan 13 to generate a sensor gas flow F through the PM sensor 12, and a control device 50. The PM sensor 12 comprises a light source (not illustrated) to irradiate the sensor gas flow with light and a light detector (not illustrated) to detect light scattered by PM in the sensor gas flow, as it is well known in the art. The PM sensor 12, the fan 13 and the control device 50 are enclosed in a housing 30. In the present example, the housing 30 comprises a bottom part 31 and a top part 32 acting as a lid. However, other constructions are possible as well.

Inlet tubing 42 guides an inlet gas flow $F_{in}$ from an inlet 41 into the sensor device 10. Outlet tubing 44 allows an outlet gas flow $F_{out}$ to exit the sensor device through an outlet 43. In the present example, the inlet gas flow $F_{in}$, the sensor gas flow F and the outlet gas flow $F_{out}$ are the same, i.e., no gas is added to or removed from the inlet gas flow $F_{in}$ before it is probed by the PM sensor 12, and no gas is added to or removed from the sensor gas flow F before it forms the outlet gas flow $F_{out}$. However, it is also conceivable that the gas flows $F_{in}$, F and $F_{out}$ are not identical. For instance, it is conceivable that a filtered sheath gas for sheathing the optical components of the PM sensor 12 is added to the inlet gas flow $F_{in}$ to form the sensor gas flow F, it is conceivable that sensor gas flows of two or more different sensors are combined to form the outlet gas flow $F_{out}$, or it is conceivable that some of the sensor gas flow F is lost to the environment during its passage through the sensor device due to leaks.

The inlet tubing 42 and the outlet tubing 44 are arranged to form a heat exchanger 40. To this end, a section of the inlet tubing 42 is arranged inside a section of the outlet tubing 44, such that the outlet tubing section surrounds the inlet tubing section, defining an annular space between the inlet tubing 42 and the outlet tubing 44. The inlet gas flow $F_{in}$ is passed through the inlet tubing 42, while the outlet gas flow $F_{out}$ is passed through the annular space between the inlet tubing 42 and the outlet tubing 44 in counterflow with the inlet gas flow $F_{in}$. For achieving high efficiency of the heat exchanger 40, the material of the inlet tubing 42 may be a material having high heat conductivity, e.g., a metal. However, for low-cost applications, it may be sufficient to use a material having lower heat conductivity, such as common plastics materials, as long as the inlet tubing has a wall thickness that is not too high.

The control device 50 communicates with the PM sensor 12. In particular, the control device causes the light source and light detector of the PM sensor 12 to be activated, and the control device registers electrical signals from the light detector, for instance, individual pulses corresponding to individual scattering events or a DC signal reflecting overall PM concentration. In more general terms, the PM sensor 12 outputs sensor signals that characterize PM in the sensor gas flow F, more precisely, sensor signals that are indicative of at least one parameter associated with PM in the sensor gas flow F. This parameter may be, in particular, a number or mass concentration $C_S$ of the PM. In addition, the sensor signals may be indicative of a size or mass distribution of the PM and/or of the velocity of the PM. The control device 50 receives these sensor signals, analyzes them and derives output signals based on the sensor signals. The output signals may directly reflect the number or mass concentration $C_S$, the size or mass distribution of the PM, and/or of the velocity of the PM. In addition, in some embodiments, the output signals may indicate the presence or absence of fog, as will be explained below.

The sensor device 10 may be used, in particular, to monitor environmental air or air in an HVAC system of a building or vehicle. In such applications, fog may enter the sensor device 10 through inlet 41. Fog comprises microscopic water droplets (schematically illustrated as dotted circles in Fig. 1), which cause scattering events in the optical PM sensor 12 very much like solid PM (schematically illustrated as black circles in Fig. 1). Therefore, the PM sensor 12 may not be able to distinguish between fog and solid PM, and the PM signals may thus reflect scattering events from both fog droplets and solid PM.

In operation, the PM sensor 12, the fan 13, the control device 50, and all other electrically operated components inside the housing 30 produce waste heat. This causes the outlet gas flow $F_{out}$ to have higher temperature than the inlet gas flow $F_{in}$. In the heat exchanger 40, heat is transferred from the outlet gas flow $F_{out}$ to the inlet gas flow. $F_{in}$. In this manner, the inlet gas flow $F_{in}$ is preheated before it forms the sensor gas flow F and reaches the PM sensor 12. This preheating causes at least some of the water droplets in the inlet gas flow $F_{in}$ to evaporate. In this manner, the negative impact of fog on the PM signals is reduced. No additional heating power is required for evaporating the water droplets. Only waste heat is used. This makes the design particularly suitable for applications where only little energy is available for operating the sensor device, as in solar- or battery-powered devices.

To maximize the preheating effect, the housing 30 is preferably heat-insulating. The material and thickness of the housing walls are chosen such that sufficient heat insulation is achieved. Preferably, the housing walls are made of a material having a thermal conductivity of less than 0.2 W/(m*K) and have a thickness of at least 5 mm, and the housing is essentially completely closed except at the inlet and outlet. In the present example, the heat exchanger 40 is arranged in the insulating top part 32 of the housing. However, any other housing design that reduces heat loss from the sensor device 10 may be used.

In some embodiments, the housing may comprise an inner housing subassembly surrounded by an outer housing subassembly. The inner housing subassembly does not need to be heat-insulating. For instance, the inner housing subassembly may be made of metal or of metal-coated plastics for achieving good electromagnetic compatibility. In particular, the inner housing subassembly, together with the components received inside it, may form a self-contained sensor module. This sensor module may then be provided with the heat exchanger 40 and may be received in the outer housing subassembly for the purpose of thermal insulation. In particular, the sensor module may be an existing, commercially available standard sensor module, being "retrofitted" with the heat exchanger 40 and with thermal insulation to better deal with fog.

The sensor device 10 may optionally comprise at least one auxiliary sensor 14, e.g., a temperature sensor, a humidity sensor or a flow sensor. While in Fig. 1 the auxiliary sensor 14 is arranged downstream of the PM sensor 12 and upstream of the fan 13, one or more auxiliary sensors may be arranged at other locations within the sensor device or may be integrated in the PM sensor 12 or in the fan 13. The control device 50 may communicate with the auxiliary sensor 14 to receive at least one auxiliary signal associated with the sensor gas flow F, the inlet gas flow $F_{in}$, and/or the outlet gas flow $F_{out}$, such as temperature, humidity and/or flow rate. The control device 50 may take the auxiliary parameter into account when calculating parameters that characterize the PM. For instance, the control device may take the flow rate into account when deriving the PM concentration $C_S$.

The control device 50 may optionally detect fog in the sensor gas flow F by the following method: The control device 50 may vary the flow rate of the sensor gas flow F by varying the power supplied to the fan 13. When fog is present, the PM concentration $C_S$ is expected to depend more strongly on the flow rate than when fog is absent. The main reasons are that at higher flow rates, the droplets spend less time in the heat exchanger, and the waste heat is carried away by a larger volume of gas per unit of time, causing the temperature difference between the inlet gas flow and the outlet gas flow to decrease. Therefore, less droplets will be evaporated at higher flow rates than at lower flow rates. The response of the PM concentration $C_S$ to the variation of flow rate thus enables the presence and, optionally, concentration of fog to be detected. The control device 50 may thus derive a droplet indicator signal (or, equivalently, fog indicator signal) $S_{fog}$, which indicates the presence of fog. In simple embodiments, this may be done in a binary manner, e.g., by comparing the dependence of the PM concentration on the flow rate to a reference dependence and setting a fog indicator signal to TRUE if the measured dependence deviates from the reference dependence by more than a predefined threshold. A reference dependence may be readily determined by appropriate calibration procedures.

While in many applications it may be sufficient to provide a binary indicator whether or not fog is present at all, in more sophisticated embodiments, the droplet indicator signal may include information about the characteristics of the fog, in particular, on droplet concentration. By subtracting the thus determined droplet concentration from the PM concentration, the control device may derive a compensated particulate matter signal $S_{PM}$ that characterizes the solid particulate matter in the sensor gas flow, excluding evaporable droplets.

Two sensor modules connected in series

Fig. 2 illustrates a sensor device 10 according to an example that is not part of the claimed invention. In this example, two sensor modules 11, 21 are connected in series. Each of the sensor modules 11, 21 is set up in essentially the same manner as the sensor device of Fig. 1. In particular, the first sensor module 11 comprises a first PM sensor 12 and a first fan 13. Likewise, the second sensor module 21 comprises a second PM sensor 22 and a second fan 23. Each of the sensor modules 11, 12 may be self-contained and may in principle be operated independently. Both sensor modules are enclosed in a common insulating housing or in two separate insulating housings. For simplicity, only the bottom part 31 of a common housing is illustrated in Fig. 2 and the subsequent drawings. It is also conceivable that each sensor module comprises an inner housing subassembly, which does not necessarily need to be heat-insulating, as explained above, and that the inner housing subassemblies of both sensor modules are received in a common outer housing subassembly, which may provide the desired thermal insulation. In particular, each of the sensor modules 11, 21 may be a commercially available standard sensor module, and the invention may thus put existing sensor modules to use for better dealing with fog.

The sensor device 10 of Fig. 2 comprises inlet tubing 42 between an inlet 41 and the first PM sensor 12 and outlet tubing 44 between the second fan 23 and an outlet 43. The first fan 13 is connected to the second PM sensor 22 by connecting tubing 46.

The fans 13, 23 generate a gas flow through each sensor module 11, 21 and thus through the sensor device 10 from the inlet 41 to the outlet 43. The gas flow forms an inlet gas flow $F_{in}$ in the inlet tubing, a first sensor gas flow $F_1$ at the first PM sensor 12, a second sensor gas flow $F_2$ at the second PM sensor 22, and an outlet gas flow $F_{out}$ in the outlet tubing 44. Since no gas is added or removed anywhere, the inlet gas flow $F_{in}$, the first and second sensor gas flows $F_1$ and $F_2$, and the outlet gas flows $F_{out}$ are the same. However, as explained in connection with the first embodiment, it is also conceivable that gas is added or removed somewhere between the inlet 41 and the outlet 43, e.g., due to leakage. Importantly, however, the second sensor gas flow $F_2$ comprises at least a portion of the first sensor gas flow $F_1$.

In contrast to the first embodiment, no heat exchanger is formed by the inlet tubing 42 and the outlet tubing 44. Instead, the second sensor gas flow $F_2$ is preheated by waste heat generated in the first sensor module 11, in particular, by the first PM sensor 12, the fan 13 and any other electrically operated components of the first sensor module 11. Thereby, water droplets are evaporated on the way between the first PM sensor 12 and the second PM sensor 22. Again, no dedicated source of additional heating power is required, making the design suitable for applications having low energy requirements.

The control device 50 derives, inter alia, first and second PM concentrations $C_{S1}$ and $C_{S2}$ from the signals recorded by the first and second PM sensors 12, 22, respectively, and compares these concentrations. If no fog is present, the concentrations $C_{S1}$ and $C_{S2}$ are expected to be essentially the same, unless some of the PM in the gas flow (typically some of the larger particles) precipitates somewhere between the first and second PM sensors 12, 22. The resulting "baseline difference" between the concentrations $C_{S1}$ and $C_{S2}$ in the absence of fog may easily be measured by carrying out, from time to time, a baseline calibration measurement under conditions for which it is known or assumed that no fog is present. For instance, the control device may trigger an automatic baseline calibration measurement based on predefined criteria, e.g., based on the time of operation since the last baseline calibration measurement and based on temperature and/or humidity of the sensor gas flows, assuming that no fog will be present if the gas flow is warm and dry.

For the following considerations, it is assumed without loss of generality that the sensor device 10 is calibrated in such a manner that it obtains the same PM concentration values $C_{S1}$ and $C_{S2}$ in the absence of fog, and that therefore any difference between the first and second PM concentration values $C_{S1}$ and $C_{S2}$ indicates the presence of fog.

The control device 50 may calculate a droplet or fog indicator signal $S_{fog}$ by comparing the first and second PM concentration signals:

$$S_{fog} = F_{fog}(C_{S1}, C_{S2}).$$

Here, $F_{fog}$ indicates a function of two variables that links the first and second PM concentration values $C_{S1}$ and $C_{S2}$ to a concentration of evaporable droplets. Various functional forms are conceivable for the function $F_{fog}$. To a good first approximation, a linear function may be used:

$$S_{fog} = \alpha(C_{S1} - C_{S2}).$$

Here, $\alpha$ is a constant of proportionality, which may be determined by calibration measurements at one or more known droplet concentrations.

The control device 50 may further calculate a compensated particulate matter signal $S_{PM}$ based on the first and second PM concentration signals:

$$S_{PM} = F_{PM}(C_{S1}, C_{S2}).$$

Here, $F_{PM}$ indicates a function of two variables that links the first and second PM concentration signals $C_{S1}$ and $C_{S2}$ to a concentration of PM, excluding evaporable droplets. Again, various functional forms are conceivable. A particularly simple functional form is the following linear form:

$$S_{PM} = C_{S2} - \beta(C_{S1} - C_{S2}),$$

where $\beta$ is again a constant of proportionality, which may be determined by calibration measurements at one or more known droplet concentrations. Another possible functional form is the following exponential form:

$$S_{PM} = C_{S1}\, e^{k|C_{S1} - C_{S2}|} + C_{S2}\left(1 - e^{k|C_{S1} - C_{S2}|}\right),$$

where the parameter k may again be determined by calibration measurements at one or more known droplet concentrations.

As in the first embodiment, auxiliary sensors 14, 24 may be present, and the control device 50 may take their readings into account when analyzing the first and second PM signals, in particular, when deriving the fog indicator signal and/or the compensated PM signal.

While in Fig. 2 the control device 50 is shown outside the housing, at least part of the control device 50 may be arranged inside the housing, as in the first embodiment. In particular, all or part of the control device 50 may be arranged in the first sensor module 11. The waste heat from the control device 50 may thus additionally be used for preheating the second sensor gas flow $F_2$ upstream of the second PM sensor 22.

Single fan

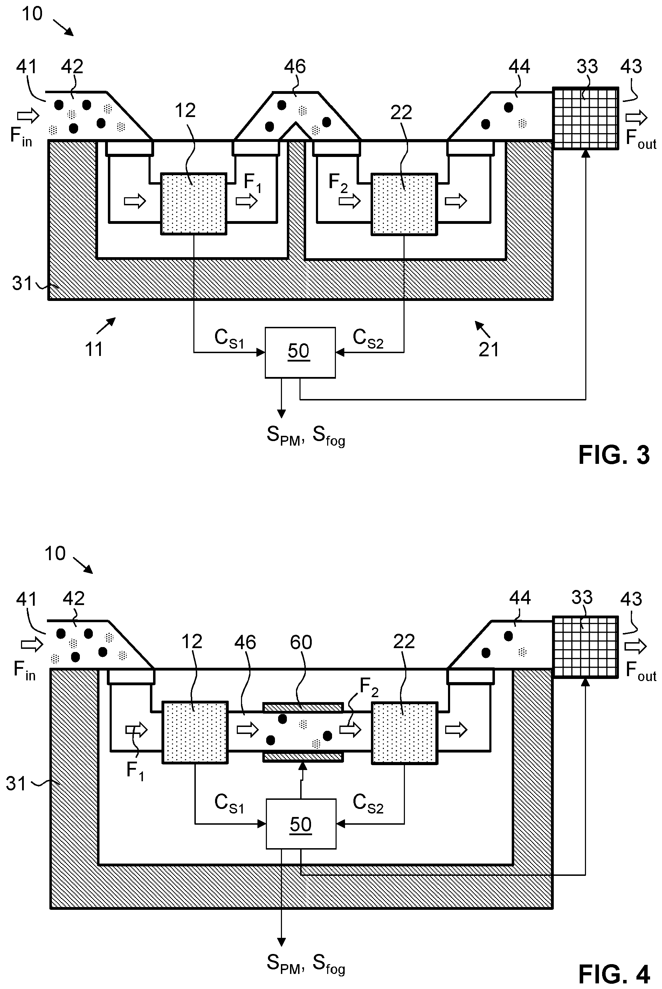

Fig. 3 illustrates a sensor device 10 according to another example that is not part of the claimed invention. This example is very similar to the previous example; however, only a single fan 33 is provided to generate flow through the sensor device 10. Again, an insulating housing is provided, only the bottom part 31 of the housing being illustrated in Fig. 3. In the present example, the fan 33 is arranged outside the housing. This may be advantageous because the fan is the component that is most likely to require service or replacement, and it may therefore be advantageous to ensure easy accessibility of the fan.

Additional heating element

Fig. 4 illustrates a sensor device 10 according to another example that is not part of the claimed invention. In this example, no thermal insulation is provided between the first and second PM sensors 12, 22. In addition, a heating element 60 is provided downstream of the first PM sensor 12 and upstream of the second PM sensor 22 to additionally heat the second sensor gas flow $F_2$.

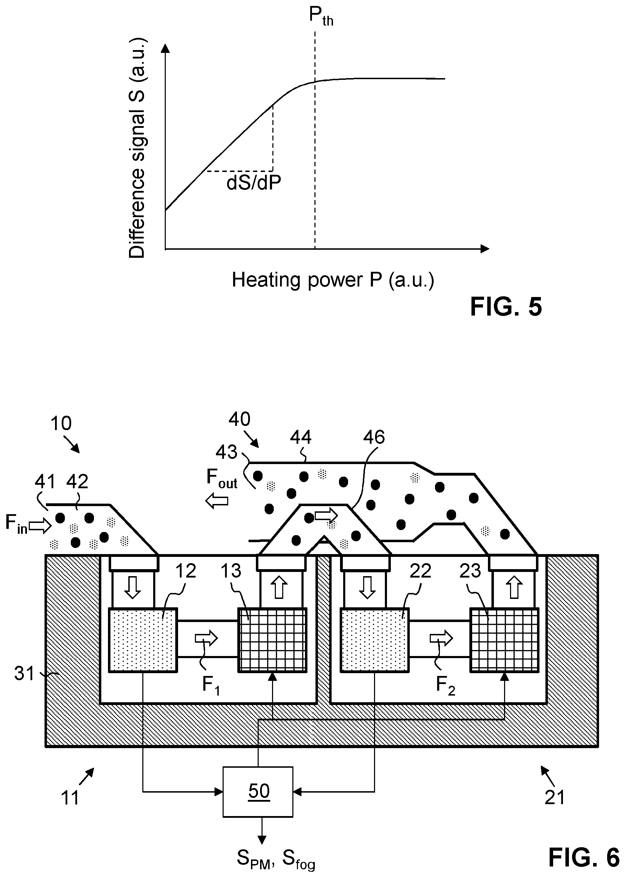

The control device 50 may vary the heating power of the heating element 60 to determine the droplet concentration more reliably. The underlying principle is illustrated in Fig. 5. When heating power P is increased in the presence of fog, the difference signal S between the first and second PM concentration signals $C_{S1}$ and $C_{S2}$ will initially increase because more and more droplets are evaporated between the first and second PM sensors due to the heating power. At higher heating power, the slope $dS/dP$ will gradually flatten out as all but the largest droplets are evaporated. Beyond a threshold power $P_{th}$, the difference signal S will remain essentially constant, as all droplets are evaporated. The threshold power is an indicator of the total mass concentration of evaporable droplets in the inlet gas flow. The correlation between threshold power $P_{th}$ and mass concentration may be determined by calibration measurements. The difference signal S at a power level at or higher than the threshold power is an indicator of the total number concentration of evaporable droplets. Again, the correlation may be established by calibration measurements. Together, both values provide an indication of average droplet mass. In this manner, fog may be additionally characterized.

A similar analysis may also be carried out by varying the flow rate through the sensor device, even in the absence of an additional heating element. At higher flow rates, the droplets have less time to evaporate than at lower flow rates, and the waste heat of the first PM sensor 12 is carried away by a larger volume of gas per unit of time, causing the gas flow to be heated to a lower temperature than at lower flow rates. Accordingly, the waste heat is able to evaporate less droplet volume than at lower flow rates. The control device 50 may vary the power supplied to fan 33 and monitor the difference signal S between the first and second PM concentration signals $C_{S1}$ and $C_{S2}$. Below a threshold flow rate, the difference signal will remain essentially constant if the fog is not too thick. The threshold flow rate may again be correlated with the total mass concentration of evaporable droplets in the flow, and the difference signal at flow rates below the threshold flow rate may be correlated with the total number concentration of evaporable droplets.

A similar analysis may even be carried out if only one single PM sensor is present and a heating element is provided upstream of that single PM sensor. For instance, in Fig. 4, it would be possible to leave away the first PM sensor 12. Instead of monitoring the difference signal between two PM concentration signals, the response of the single PM concentration signal $C_{S2}$ to a variation of heating power would then be monitored. Assuming that PM concentration does not change on the short time scale required for varying the heating power, the PM concentration signal is expected to be essentially independent of heating power in the absence of fog, while the PM concentration signal will depend strongly on heating power in the presence of fog. In this manner, fog can again be readily detected. It is noted that this concept may be applied even if the heating element 60 is the only means of preheating the sensor gas flow. It is further noted that it is not required to operate the heating element permanently. The heating element is only required to be switched on for determining the presence or absence of fog. Therefore, this method may also be applied in applications requiring low energy consumption.

## Second embodiment

Fig. 6 illustrates a sensor device 10 according to a second embodiment of the present invention. This embodiment combines the concept of the first embodiment (preheating using waste heat of a sensor module itself) with the concept of the previous examples (preheating using waste heat of a first sensor module upstream of a second sensor module). In the second embodiment, on the one hand, two PM sensor modules 11, 21 are connected in series. On the other hand, the second sensor gas flow $F_2$ is additionally preheated downstream of the first sensor module 11 and upstream of the second PM sensor 22 by heat exchange with the outlet gas flow $F_{out}$. To this end, a heat exchanger 40 is formed by a section of the connecting tubing 46 and a section of the outlet tubing 44 in a concentric counterflow arrangement, in a similar manner as the heat exchanger of the first embodiment. In this manner, the waste heat generated by the second PM sensor module 21 is used for preheating the second sensor gas flow in addition to the waste heat of the first PM sensor module 11, causing a larger proportion of water droplets to be evaporated between the first and second PM modules 11, 21 than in the previous examples, while preserving all of the advantages of these examples.

## Third embodiment

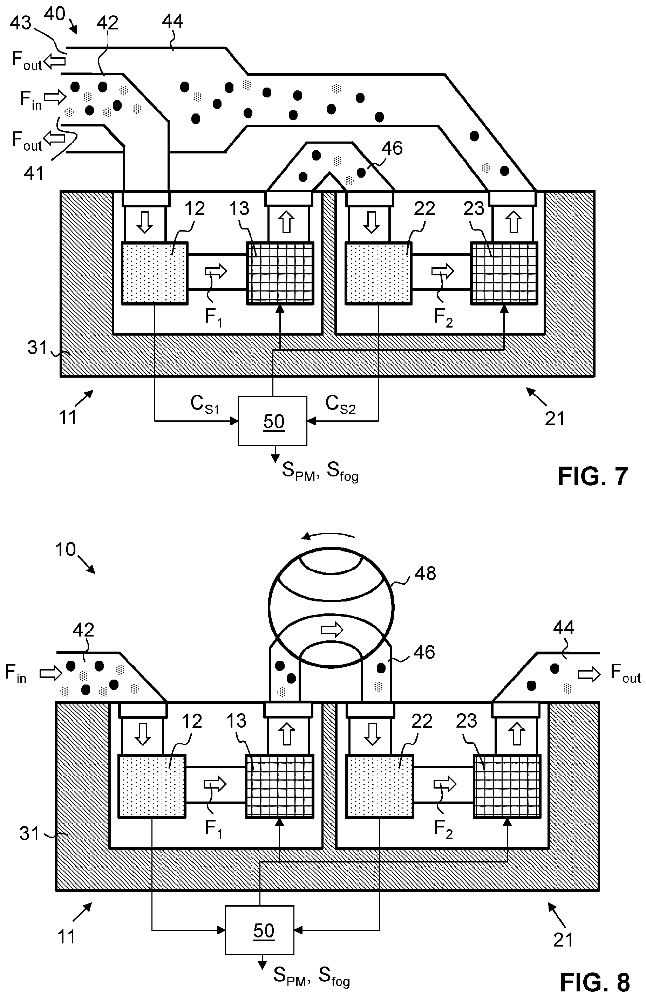

Fig. 7 illustrates a sensor device 10 according to a third embodiment of the present invention. In this embodiment, again two PM sensor modules 11, 21 are connected in series, as in the previous examples. A heat exchanger 40 preheats the inlet gas flow $F_{in}$ by transferring heat from the outlet gas flow $F_{out}$, as in the first embodiment. The third embodiment thus reduces the number and/or size of water droplets already upstream of the first sensor module 11. On the one hand, while this embodiment is able to reduce the influence of fog on both PM concentration values $C_{S1}$ and $C_{S2}$, their difference in the presence of fog will generally be lower than in the second embodiment, and fog may therefore be more difficult to detect than in the second embodiment. On the other hand, this embodiment may be easier to realize than the second embodiment, in particular, if commercially available standard sensor modules are used.

## Four-way valve

Fig. 8 illustrates a sensor device 10 according to another example that is not part of the claimed invention. In this example, a four-way valve 48 is provided between the first and second sensor modules 11, 21. In a first position, shown in Fig. 8, the valve 48 connects the first and second sensor modules 11, 21 in series, enabling operation like in the above examples. In a second position, not shown in Fig. 8, the valve 48 disconnects the two sensor modules 11, 21 from each other, thus enabling each sensor module to be operated separately.

## Cartridges in tubing sections

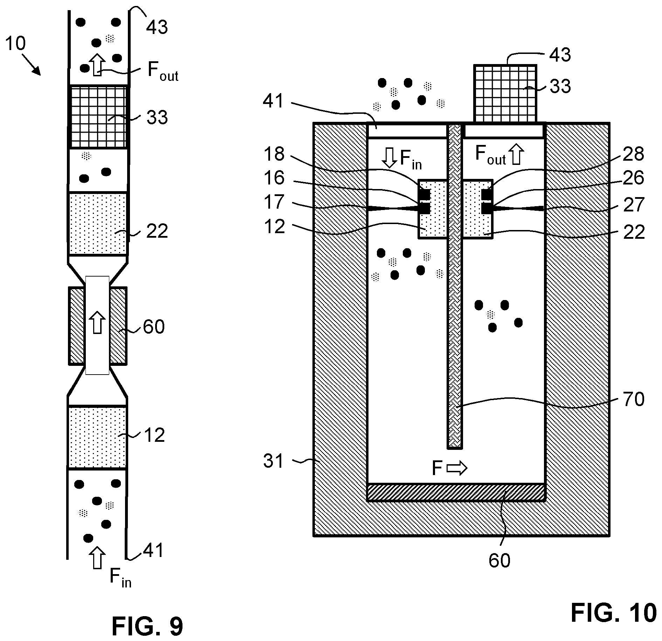

Fig. 9 illustrates a sensor device 10 according to another example that is not part of the claimed invention. In this example, the PM sensors 12, 22 are arranged as cartridges in simple tubing sections. This example can therefore be realized very cost-efficiently. Optionally, a constriction is formed between the first and second PM sensors 12, 22, and a heater 60 may be arranged around the constriction. The heater 60 may be used to additionally heat the gas flow as it passes through the constriction. A single fan 33 generates the gas flow through the sensor device. In some embodiments, the fan 33 may be left away, and the heater 60 may be employed for generating the gas flow by convection provided that the tube section that is surrounded by the heater 60 is suitably oriented. A heat-insulating housing (not shown) may be provided around the tubing.

## Fourth embodiment

Fig. 10 illustrates a sensor device 10 according to a fourth embodiment of the present invention. Two PM sensors 12, 22 are mounted on opposite sides of a common circuit board 70, both sides comprising a heat-conducting layer, in particular, a metal layer. The first PM sensor 12 is arranged near the inlet 41 of the sensor device 10, while the second PM sensor 22 is arranged near the outlet 43. Each PM sensor comprises a light source 16, 26 to generate a light beam 17, 27 across a gas flow F in the sensor device 10 and a light detector 18, 28 to register light that is scattered from PM in the gas flow. Both sides of the circuit board 70 form a boundary of a flow channel for the gas flow F. The gas flow F first passes the first PM sensor 12, then travels in a first direction while being in thermal contact with the first side of the circuit board 70, changes direction by 180°, and then travels in a second direction that is opposite to the first direction while being in thermal contact with the second side of the circuit board 70, before passing the second PM sensor 22. Both PM sensors 12, 22 as well as any other components on the circuit board generate waste heat, which is efficiently distributed over the surface area of both sides of the circuit board and transferred to the gas flow F by the circuit board 70. The circuit board 70 thus acts as a heat exchanger for preheating the gas flow F downstream of the first PM sensor 12 and upstream of the second PM sensor 22, using waste heat generated by both the first and second PM sensors 12, 22. If required, a heating element 60 may be additionally provided.

In order to increase the efficiency of heat exchange with the circuit board 70 and/or the heating element 60 with the gas flow F, one or more heat sinks, which have an increased surface area as it is well known in the art, may be connected to the circuit board 70 and/or to the heating element 60 such that the gas flow F is in contact with the heat sinks instead of the circuit board or heating element itself.

Flow barrier

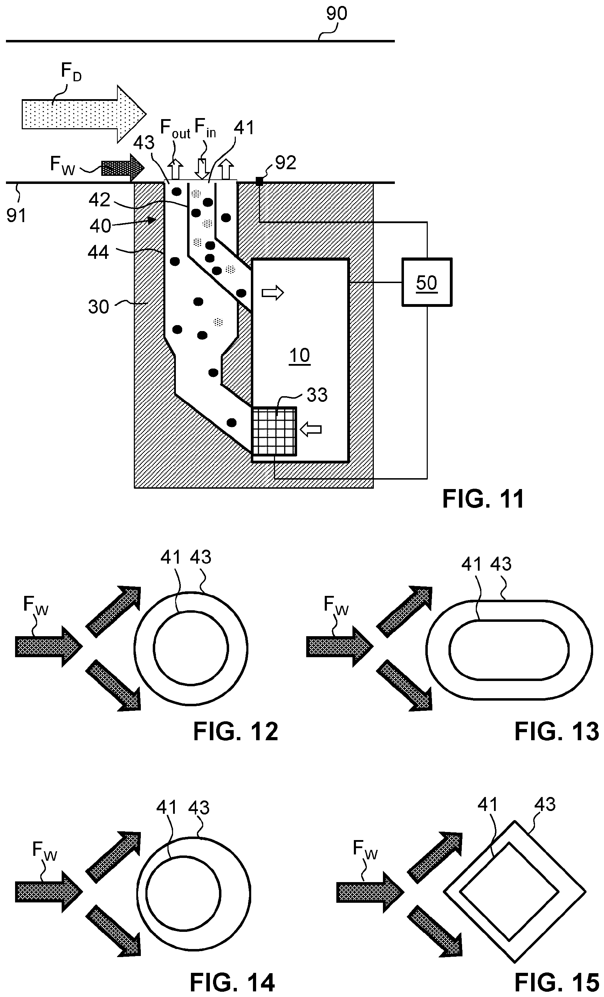

Fig. 11 illustrates a gas flow system that comprises a sensor device 10 attached to a duct 90. The sensor device 10 may be a sensor device according to one of the previously described embodiments of the present invention or any other kind of sensor device as defined in the claims that comprises at least one environmental sensor for determining at least one environmental parameter associated with a duct gas flow $F_D$ in the duct 90.

The sensor device 10 exchanges gas with the duct gas flow $F_D$ through one or more openings in a duct wall 91. To this end, the sensor device 10 comprises inlet tubing 42 forming an inlet 41 for allowing an inlet gas flow $F_{in}$ to enter the sensor device 10 from the duct 90 and outlet tubing 44 forming an outlet 43 for allowing an outlet gas flow $F_{out}$ to exit the sensor device 10 into the duct 90. The inlet gas flow $F_{in}$ is thus sampled from the duct gas flow $F_D$, and all or part of the sampled gas is returned to the duct gas flow $F_D$ as outlet gas flow $F_{out}$. In order minimize flow resistance and disturbances in the duct 90, the inlet tubing 42 and outlet tubing 44 of the sensor device 10 do not appreciably protrude into the interior of duct 90.

Particulate matter may be entrained in the duct gas flow $F_D$, including relatively large particles such as pollen, fragments of leaves, insect wings, hairs etc. Some of these large particles may slowly move along the duct wall 91, as symbolized by a wall flow $F_W$. In order to prevent such slowly moving, large particles from entering the sensor device 10, the inlet tubing 42 and the outlet tubing 44 are arranged in such a manner that the outlet gas flow $F_{out}$ has at least one portion that flows into the duct upstream of the inlet 41 with respect to the duct gas flow $F_D$, this portion of the outlet gas flow $F_{out}$ having an appreciable component perpendicular to the duct gas flow, thus forming a flow barrier (or gas barrier) that redirects large, slowly moving particles away from the inlet 41. In this manner, large particles near the duct wall 91 are less likely to enter the sensor device 10 through the inlet 41. Specifically, in the embodiment of Fig. 11, a section of the outlet tubing 44 surrounds a section of the inlet tubing 42. This causes the outlet gas flow $F_{out}$ to have annular cross-section in a plane perpendicular to the outlet gas flow direction, surrounding the oppositely directed inlet gas flow $F_{in}$. The portion of the outlet gas flow $F_{out}$ that is upstream of the inlet gas flow $F_{in}$ with respect to the duct gas flow $F_D$ forms the flow barrier.

The flow barrier not only prevents at least some of the large particles near the duct wall from entering the sensor device 10, but it also reduces short-term variations ("noise") of the output signals of the sensor device due to fluctuations of a property associated with the gas flow that is measured by the sensor device, e.g., fluctuations of the PM load. This is so because an arrangement of the inlet and outlet that leads to the formation of a flow barrier may also create a partial short circuit between the outlet gas flow and the inlet gas flow, causing part of the outlet gas flow to be recycled into the inlet gas flow. This partial short circuit has similar effects as calculating a moving average for the environmental parameter determined by the sensor device, e.g., for the PM concentration. This is in turn equivalent to applying a low-pass filter to the output signals of the sensor device. By causing a partial short circuit between the outlet gas flow and the inlet gas flow, noise is reduced, and the requirements for filtering during signal processing may thus be relaxed.

Yet another advantage of the proposed arrangement of the inlet and outlet is that the pressure difference between the inlet and the outlet in the presence of the duct flow is reduced. As a consequence, the influence of the flow rate of the duct flow on the flow rate through the sensor device is reduced, enabling these flow rates to be regulated separately.

In the illustrated embodiment, the inlet tubing 42 and the outlet tubing 44 form a heat exchanger 40, as explained in more detail in connection with the first, second and third embodiments.

Figs. 12-14 illustrate different arrangements of the inlet 41 and the outlet 43. In Fig. 12, the inlet 41 and the outlet 43 are both circular and exactly concentric. In Fig. 13, the inlet and outlet 43 deviate from circular shape, being oval, but are still exactly concentric. In Figs. 14 and 15, the inlet 41 and outlet 43 are not exactly concentric. As a result, the annular space between the inlet 41 and the outlet 43 is narrower in a region upstream of the inlet 41 with respect to the duct flow $F_D$ than in a region downstream of the inlet 41. This causes the outlet gas flow $F_{out}$ to have different flow velocities upstream and downstream of the inlet 41. Specifically, the flow component perpendicular to the duct flow has a velocity maximum upstream of the inlet 41. In this manner, the efficiency of the flow barrier may be increased.

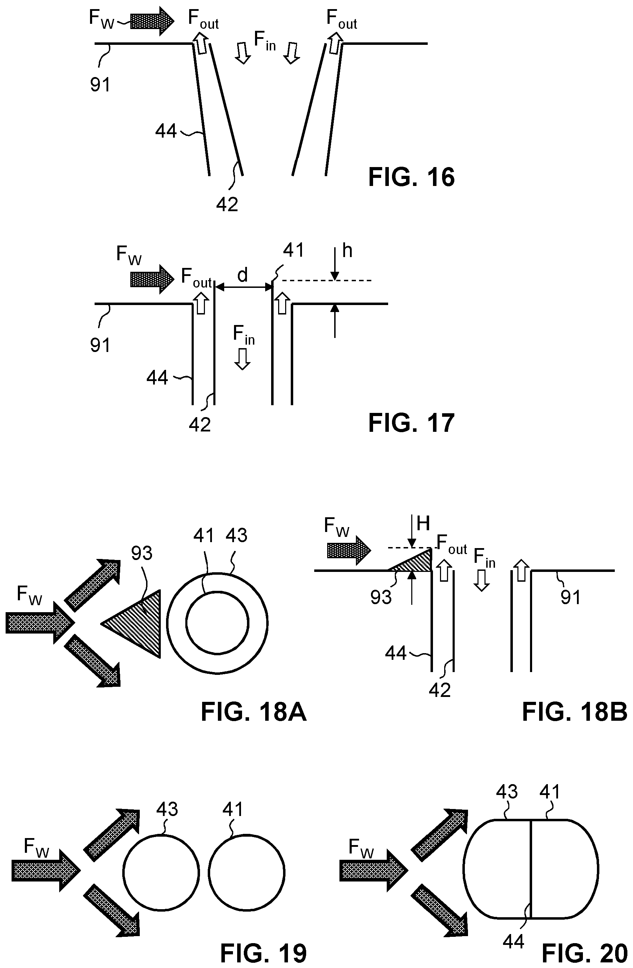

As illustrated in Fig. 16, the inlet tubing 42 and the outlet tubing 44 may together form a nozzle for accelerating the outlet gas flow $F_{out}$ along a direction having an appreciable component perpendicular to the duct flow.

In the embodiment of Fig. 17, the inlet tubing 42 slightly protrudes into the duct, protruding beyond the end of the outlet tubing 44 that delimits the outer perimeter of the outlet 43 by a height h. This additionally helps with preventing particles that move along the duct wall 91 from entering the inlet 41. The height h may be, e.g. between 20% and 100% of the diameter of the inlet 41 (for a non-circular cross section of the inlet, the diameter is calculated as $d = \sqrt{4A/\pi}$ , where $A$ is the cross-sectional area of the inlet). In absolute numbers, the height h may be, e.g. 1 to 20 mm.

In the embodiment of Figs. 18A and 18B, a deflector element 93 is arranged upstream of both the outlet 43 and the inlet 41. The deflector element 93 is wedge-shaped, having a triangular footprint in a top view along the direction of the inlet gas flow, one vertex of the triangle being directed towards the oncoming wall flow $F_W$, thus laterally redirecting the wall flow $F_W$ away from the inlet 41 (see Fig. 18A). In a side view along a direction that is perpendicular to both the duct flow and the inlet gas flow, the deflector forms a ramp of height H, additionally lifting off the particles in the wall flow $F_W$ away from the duct wall 91 towards the interior of the duct, where they can more easily be further deflected by the flow barrier (see Fig. 18B). The height H may be, e.g. between 20% and 100% of the diameter of the inlet 41. In absolute numbers, the height H may be, e.g. 1 to 20 mm. Of course, deflector elements with other shapes may be employed as well.

In the embodiments of Figs. 19 and 20, the outlet 43 does not surround the inlet 41. Instead, the outlet 43 is arranged upstream of the inlet 41 with respect to the duct flow. Specifically, in Fig. 20, the inlet 41 is arranged immediately adjacent to the outlet 43, being separated from the outlet 43 only by a separating wall 44.

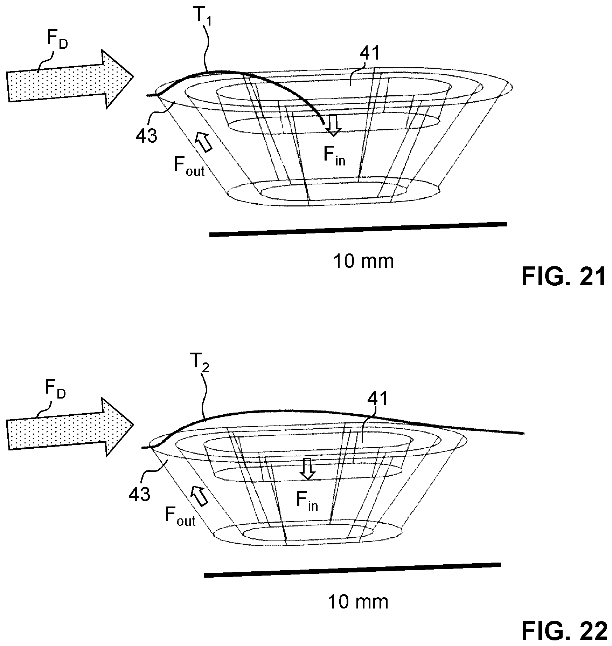

Figs. 21 and 22 illustrate representative particle trajectories $T_1$, $T_2$ in the duct 90 for an arrangement of the inlet 41 and outlet 43 as shown in these Figures. The size of the arrangement is indicated by a scale bar in both Figures. The trajectories were calculated by flow simulations, using the simulation software COMSOL Multiphysics. The following parameters were used for the simulation: Flow velocity of duct flow at center of duct = 1 m/s, leading to a flow velocity of 0.1 m/s for particles close to the duct walls; flow rates of inlet and outlet gas flows = 0.5 l/min.

In the simulation that resulted in Fig. 21, the particle was assumed to have a size of 10 $\mu$m. While the flow barrier caused by the outlet gas flow $F_{out}$ is able to somewhat deflect the particle, the resulting trajectory $T_1$ still ends in the inlet 41. In contrast, in the simulation that resulted in Fig. 22, the particle was assumed to be much larger, having a size of 50 $\mu$m. Here, the flow barrier deflects the particle to such an extent that its trajectory avoids the inlet 41. The simulations thus show that heavier, larger particles are deflected by the flow barrier more efficiently than lighter, smaller particles.

Further simulations show that it is advantageous to keep the flow velocity of the outlet gas flow in a similar range as the flow velocity of the duct gas flow near the duct wall. It may therefore be advantageous to regulate the flow velocity of the outlet gas flow to correlate with the flow velocity of the duct gas flow. To this end, the gas flow system may comprise a duct gas flow sensor 92 (see Fig. 11) for determining a flow rate or flow velocity of the duct gas flow $F_D$. The sensor device 10 may comprise a flow-generating device 33, e.g., a fan, for generating the flow of the outlet gas flow. A control device 50 may receive a duct gas flow rate signal from the duct gas flow sensor 92 and operate the flow-generating device 33 in such a manner that the outlet gas flow rate correlates with the duct gas flow rate.

Control device

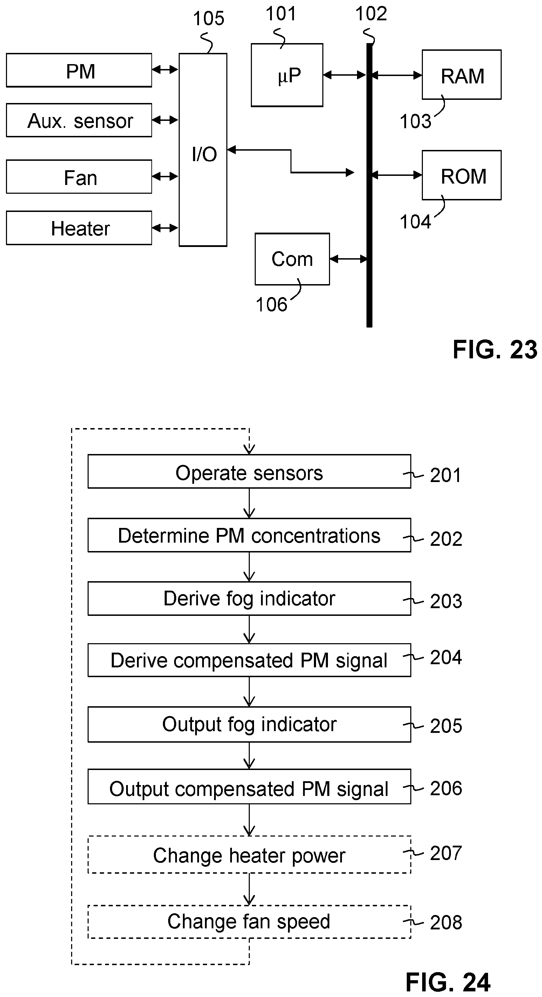

Fig. 23 illustrates, in a highly schematic manner, an exemplary functional diagram of a control device, which may be used as the control device 50 in the previously described embodiments of a sensor device. The control device comprises a microprocessor ($\mu$P) 101, which communicates with various other components via a bus 102. Also connected to the bus 102 are a random-access memory (RAM) 108 and a read-only memory (ROM). The ROM may in particular store a computer program in machine-readable form for execution by the microprocessor 101. An input/output (I/O) interface 105 enables communication of the control device with various input and output devices, in particular, to the PM sensors 12, 22, to the auxiliary sensors 14, 24, to the fans 13, 23, 33, and to the heater 60. A communication interface 106 provides wired or wireless communication capabilities to the control device for communication with other devices, e.g., via an I2C or UART interface.

The compensated PM signal and of the fog indicator may be outputted through this interface.

Flow diagram of method

An exemplary method of operation is illustrated in Fig. 24. In step 201, the control device operates the various sensors, in particular, the PM sensors 12, 22 and, optionally, the auxiliary sensors 14, 24. In step 202, it determines PM concentration values from the sensor signals. In step 203, the control device derives a fog indicator signal from the concentration signals, as explained above. In step 204, the control device derives a compensated PM signal, as also explained above. In step 205, the control device outputs the fog indicator signal. In step 206, the control device outputs the compensated PM signal. In step 207, the control device optionally changes heater power if a heater is present. In step 208, the control device optionally changes fan speed. The process may then be repeated at the changed heater power or fan speed, and the results may be taken into account when determining the fog indicator signal and/or the compensated PM signal, as discussed in more detail above.

As will have become apparent by the present description, various modifications are possible without leaving the scope of the present invention as defined by the appended claims, and it is to be understood that the invention is not limited to the specific embodiments described herein.

LIST OF REFERENCE SIGNS

| 10 | Sensor device | 50 | Control device |
|----|---------------|----|----------------|
| 11 | First sensor module | 60 | Heater |
| 12 | First measurement unit | 70 | Circuit board |
| 13 | First fan | 80 | Deflector element |
| 14 | First auxiliary sensor | 90 | Duct |
| 16 | First light source | 91 | Duct wall |
| 17 | First light beam | 92 | Duct gas flow sensor |
| 18 | First light detector | 93 | Deflection element |
| 21 | Second sensor module | 101 | Microprocessor |
| 22 | Second measurement unit | 102 | Bus |
| 23 | Second fan | 103 | RAM |
| 24 | Second auxiliary sensor | 104 | ROM |
| 26 | Second light source | 105 | I/O Interface |
| 27 | Second light beam | 106 | Communication interface |
| 28 | Second light detector | 201-208 | Method steps |
| 30 | Housing | F | Sensor gas flow |
| 31 | Bottom part | $F_1$ | First sensor gas flow |
| 32 | Top part | $F_2$ | Second sensor gas flow |
| 33 | Common fan | $F_{in}$ | Inlet gas flow |
| 40 | Heat exchanger | $F_{out}$ | Outlet gas flow |
| 42 | Inlet | $F_D$ | Duct flow |
| 42 | Inlet tubing | $F_W$ | Surface flow |
| 43 | Outlet | $T_1$ | First trajectory |
| 44 | Outlet tubing | $T_2$ | Second trajectory |
| 46 | Connecting tubing | | |
| 48 | Rotary valve | | |

**Claims**

1.  A sensor device (10) comprising an environmental sensor (12; 22) for determining at least one environmental parameter associated with a sensor gas flow (F, $F_1$; $F_2$) through the sensor device (10),
    **characterised in that**
    the sensor device (10) is configured to preheat at least a portion of the sensor gas flow (F; $F_1$; $F_2$) upstream of the environmental sensor (12; 22) using waste heat generated by the environmental sensor (12; 22) itself, the sensor device (10) comprising a heat exchanger (40; 40') for exchanging heat between at least a first portion of the sensor gas flow (F; $F_1$; $F_2$) upstream of the environmental sensor (12; 22) and at least a second portion of the sensor gas flow (F; $F_1$; $F_2$) downstream of the environmental sensor (12; 22), such that the portion of the sensor gas flow (F; $F_1$; $F_2$) is

preheated using waste heat generated by the environmental sensor (12; 22) itself.

2. The sensor device (10) of claim 1, comprising:

an inlet (41) for allowing an inlet gas flow ($F_{in}$) to enter the sensor device, the inlet gas flow ($F_{in}$) forming the first portion of the sensor gas flow ($F$, $F_1$; $F_2$); and
an outlet (43) for allowing an outlet gas flow ($F_{out}$) to exit the sensor device, the outlet gas flow ($F_{out}$) comprising the second portion of the sensor gas flow ($F$, $F_1$; $F_2$),
wherein the heat exchanger (40) is configured to exchange heat between the inlet gas flow ($F_{in}$) and the outlet gas flow ($F_{out}$), and
wherein the heat exchanger (40) preferably comprises an inlet tubing section (42) arranged between the inlet (41) and the environmental sensor (12; 22) and an outlet tubing section (44) arranged between the environmental sensor (12; 22) and the outlet (43), the outlet tubing section (44) surrounding the inlet tubing section (42).

3. The sensor device (10) of any one of the preceding claims,
wherein the environmental sensor (12) is a particulate matter sensor for determining at least one parameter associated with particulate matter in the sensor gas flow ($F$, $F_1$; $F_2$).

4. The sensor device (10) of claim 3, comprising a flow-generating device (13; 23; 33; 60) configured to generate the sensor gas flow ($F$; $F_1$; $F_2$) and comprising a control device (50) configured to receive sensor signals ($C_S$; $C_{S1}$; $C_{S2}$) from the environmental sensor (12; 22), to operate the flow-generating device (13; 23; 33; 60) to cause a variation of a flow rate of the sensor gas flow ($F$; $F_1$; $F_2$), to determine a response of the sensor signals ($C_S$; $C_{S1}$; $C_{S2}$) to the variation of the flow rate ($F$; $F_1$; $F_2$), and to derive an output signal using said response of the sensor signals ($C_S$; $C_{S1}$; $C_{S2}$), the output signal comprising at least one of:

a droplet indicator signal ($S_{fog}$) that is indicative of at least one property of evaporable droplets in the sensor gas flow ($F$; $F_1$; $F_2$), in particular, indicative of at least one of a presence, a number concentration, a mass concentration and a size or mass distribution of said evaporable droplets; and
a compensated particulate matter signal ($S_{PM}$) that is indicative of at least one property of particulate matter excluding evaporable droplets in the sensor gas flow ($F$; $F_1$; $F_2$), in particular, indicative of at least one of a number concentration, a mass concentration and a size or mass distribution of said particulate matter excluding evaporable droplets, and
wherein the sensor device optionally further comprises at least one auxiliary sensor (14, 24), wherein the control device (50) is configured to receive at least one auxiliary signal from the at least one auxiliary sensor (14, 24) and to take the at least one auxiliary signal into account when deriving the output signal,
the at least one auxiliary sensor (14, 24) comprising at least one of:

a temperature sensor for determining a temperature signal;
a humidity sensor for determining a humidity signal; and
a flow rate sensor for determining a flow rate signal.

5. A sensor device (10) comprising:

a first environmental sensor (12) for determining at least one environmental parameter associated with a first sensor gas flow ($F_1$) through the sensor device (10); and
a second environmental sensor (22) for determining at least one environmental parameter associated with a second sensor gas flow ($F_2$) through the sensor device (10), the second environmental sensor (22) being arranged downstream of the first environmental sensor (12) such that the second sensor gas flow ($F_2$) comprises at least a portion of the first sensor gas flow ($F_1$) downstream of the first environmental sensor (12),
wherein the sensor device (10) is configured to preheat the second sensor gas flow ($F$; $F_1$; $F_2$) upstream of the second environmental sensor (22) using waste heat generated by the first environmental sensor (22),
**characterised in that** the sensor device (10) comprises a heat exchanger (40) for exchanging heat between at least a first portion of the second sensor gas flow ($F_2$) upstream of the second environmental sensor (22) and at least a second portion of the second sensor gas flow ($F_2$) downstream of the second environmental sensor (22), such that the second sensor gas flow ($F_2$) is additionally preheated using waste heat generated by the second environmental sensor (22).

6. The sensor device (10) of claim 5,

wherein the first environmental sensor (12) is a first particulate matter sensor for determining at least one parameter associated with particulate matter in the first sensor gas flow ($F_1$), and
wherein the second environmental sensor (22) is a second particulate matter sensor for determining at least one parameter associated with particulate matter in the second sensor gas flow ($F_2$).

7.  The sensor device (10) of claim 6, comprising a control device (50) configured to obtain first sensor signals ($C_{S1}$) from the first environmental sensor (12) and second sensor signals ($C_{S2}$) from the second environmental sensor (22) and to derive an output signal using the first and second sensor signals ($C_{S1}$, $C_{S2}$),
    the output signal comprising at least one of:

    a droplet indicator signal ($S_{fog}$) that is indicative of at least one property of evaporable droplets in the first and/or second sensor gas flows ($F_1$, $F_2$), in particular, indicative of at least one of a presence, a number concentration, a mass concentration and a size or mass distribution of said evaporable droplets; and
    a compensated particulate matter signal ($S_{PM}$) that is indicative of at least one property of particulate matter excluding evaporable droplets in the first and/or second sensor gas flows ($F_1$, $F_2$), in particular, indicative of at least one of a number concentration, a mass concentration and a size or mass distribution of said particulate matter excluding evaporable droplets.

8.  The sensor device (10) of any one of claims 5 to 7, comprising at least one flow-generating device (13; 23; 33; 60) configured to generate the first and second sensor gas flows ($F_1$, $F_2$), in particular, a single flow-generating device (33; 60) configured to generate both the first and second sensor gas flows ($F_1$, $F_2$),

    wherein the control device (50) is configured to operate the at least one flow-generating device (13; 23; 33; 60) to cause a flow rate variation of at least one of the first and second sensor gas flows ($F_1$, $F_2$) and to determine a response of the first and/or second sensor signals ($C_{S1}$, $C_{S2}$) to the flow rate variation, and
    wherein the control device (50) is configured to take said response to the flow rate variation into account when deriving the output signal.

9.  The sensor device (10) of claim 7 or 8,

    comprising a heating device (60) configured to heat the second sensor gas flow ($F_2$) upstream of the second particulate matter sensor (22),
    wherein the control device (50) is configured to operate the heating device (60) to cause a variation of heating power (P) and to determine a response of the first and/or second sensor signals ($C_{S1}$, $C_{S2}$) to the variation of heating power (P), and
    wherein the control device (50) is configured to take said response to the variation of heating power (P) into account when deriving the output signal.

10. The sensor device (10) of any one of claims 6 to 9,

    wherein the first particulate matter sensor (12) is an optical particulate matter sensor comprising a first light source (16) and a first light detector (18),
    wherein the second particulate matter sensor (22) is an optical particulate matter sensor comprising a second light source (26) and a second light detector (28),
    wherein the first and second light sources (16, 26) are mounted on a common circuit board (70), in particular, on opposite sides thereof, and
    wherein the circuit board (70) is arranged such that the second sensor gas flow ($F_2$) upstream of the second particulate matter sensor (22) is in thermal contact with the circuit board (70), preferably, in thermal contact with both a first side and a second side of the circuit board (70).

11. A method for determining at least one environmental parameter associated with a sensor gas flow (F; $F_1$; $F_2$) using a sensor device (10) comprising at least one environmental sensor (12; 22), the sensor device (10) being preferably a sensor device (10) according to any one of claims 1 to 4, the method comprising:

    preheating the sensor gas flow (F; $F_1$; $F_2$) upstream of the environmental sensor (12; 22); and
    exposing the environmental sensor (12; 22) to the preheated sensor gas flow (F; $F_1$; $F_2$),
    wherein the sensor gas flow (F; $F_1$; $F_2$) is preheated using waste heat generated by the environmental sensor (12; 22) itself,

wherein preheating comprises exchanging heat between at least a first portion of the sensor gas flow (F; $F_1$; $F_2$) upstream of the environmental sensor (12; 22) and at least a second portion of the sensor gas flow (F; $F_1$; $F_2$) downstream of the environmental sensor (12; 22), such that the sensor gas flow (F) is preheated using waste heat generated by the environmental sensor (12; 22) itself,

wherein optionally the environmental sensor (12; 22) is a particulate matter sensor, the environmental parameter being at least one parameter associated with particulate matter in the sensor gas flow (F, $F_1$; $F_2$), and wherein optionally the method comprises:

receiving sensor signals ($C_S$; $C_{S1}$; $C_{S2}$) from the environmental sensor (12; 22);
causing a variation of a flow rate of the sensor gas flow (F; $F_1$; $F_2$);
determining a response of the sensor signals ($C_S$; $C_{S1}$; $C_{S2}$) to the variation of the flow rate (F; $F_1$; $F_2$); and
deriving an output signal using said response of the sensor signals ($C_S$; $C_{S1}$; $C_{S2}$),
the output signal comprising at least one of:

a droplet indicator signal ($S_{fog}$) that is indicative of at least one property of evaporable droplets in the sensor gas flow (F; $F_1$; $F_2$), in particular, indicative of at least one of a presence, a number concentration, a mass concentration and a size or mass distribution of said evaporable droplets; and
a compensated particulate matter signal ($S_{PM}$) that is indicative of at least one property of particulate matter excluding evaporable droplets in the sensor gas flow (F; $F_1$; $F_2$), in particular, indicative of at least one of a number concentration, a mass concentration and a size or mass distribution of said particulate matter excluding evaporable droplets.

12. A method for determining at least one environmental parameter associated with a sensor gas flow (F; $F_1$; $F_2$) using a sensor device (10) comprising:

a first environmental sensor (12) for determining at least one environmental parameter associated with a first sensor gas flow ($F_1$) through the sensor device; and
a second environmental sensor (22) for determining at least one environmental parameter associated with a second sensor gas flow ($F_2$) through the sensor device,
in particular, using the sensor device of any one of claims 5 to 10,
the method comprising feeding at least a portion of the first sensor gas flow ($F_1$) to the second environmental sensor (22) such that the second sensor gas flow ($F_2$) comprises at least a portion of the first sensor gas flow ($F_1$) downstream of the first environmental sensor (12),
wherein the second sensor gas flow ($F_2$) is preheated using waste heat generated by the first environmental sensor (12),
wherein heat is exchanged between at least a first portion of the second sensor gas flow ($F_2$) upstream of the second environmental sensor (22) and at least a second portion of the second sensor gas flow ($F_2$) downstream of the second environmental sensor, such that the second sensor gas flow ($F_2$) is additionally preheated using waste heat generated by the second environmental sensor (22), and

wherein the second environmental sensor (22) is exposed to the preheated second sensor gas flow ($F_2$).

13. The method of claim 12,

wherein the first environmental sensor (12) is a first particulate matter sensor for determining at least one parameter associated with particulate matter in the first sensor gas flow ($F_1$) and the second environmental sensor (22) is a second particulate matter sensor for determining at least one parameter associated with particulate matter in the second sensor gas flow ($F_2$),
wherein optionally the method comprises:

receiving first sensor signals ($C_{S1}$) from the first environmental sensor (12);
receiving second sensor signals ($C_{S2}$) from the second environmental sensor (22); and
deriving an output signal using the first and second sensor signals ($C_{S1}$; $C_{S2}$), the output signal comprising at least one of:

a droplet indicator signal ($S_{fog}$) that is indicative of at least one property of evaporable droplets in the first and/or second sensor gas flows ($F_1$, $F_2$), in particular, indicative of at least one of a presence, a number concentration, a mass concentration and a size or mass distribution of said evaporable droplets; and

a compensated particulate matter signal ($S_{PM}$) that is indicative of at least one property of particulate matter excluding evaporable droplets in the first and/or second sensor gas flows ($F_1$, $F_2$), in particular, indicative of at least one of a number concentration, a mass concentration and a size or mass distribution of said particulate matter excluding evaporable droplets.

14. The method of claim 12 or 13, further comprising:

causing a flow rate variation of at least one of the first and second sensor gas flows ($F_1$, $F_2$); and
determining a response of the first and/or second sensor signals ($C_{S1}$; $C_{S2}$) to the flow rate variation; and
taking the flow rate variation into account when deriving the output signal.

15. The method of any one of claims 12 to 14, comprising:

applying a heating power to the second sensor gas flow ($F_2$) to heat the second sensor gas flow ($F_2$) upstream of the second particulate matter sensor (22),
causing a variation of the heating power;
determining a response of the first and/or second sensor signals ($C_{S1}$; $C_{S2}$) to the variation of the heating power; and
taking said response to the variation of the heating power into account when deriving the output signal.

**Patentansprüche**

1. Sensorvorrichtung (10) mit einem Umgebungssensor (12; 22) zur Bestimmung mindestens eines Umgebungsparameters, der einem Sensorgasstrom (F, $F_1$ ; $F_2$) durch die Sensorvorrichtung (10) zugeordnet ist,
**dadurch gekennzeichnet, dass**
die Sensorvorrichtung (10) dazu ausgebildet ist, zumindest einen Teil des Sensorgasstroms (F; $F_1$; $F_2$) stromaufwärts des Umgebungssensors (12; 22) unter Verwendung von Abwärme vorzuwärmen, die durch den Umgebungssensor (12; 22) selbst erzeugt wird f, wobei die Sensorvorrichtung (10) einen Wärmetauscher (40; 40') zum Austauschen von Wärme zwischen mindestens einem ersten Teil des Sensorgasstroms (F; $F_1$; $F_2$) stromaufwärts des Umgebungs-sensors (12; 22) und mindestens einem zweiten Teil des Sensorgasstroms (F; $F_1$; $F_2$) stromabwärts des Umge-bungssensors (12; 22) aufweist, so dass der Teil des Sensorgasstroms (F; $F_1$; $F_2$) unter Verwendung von Abwärme vorgewärmt wird, die durch den Umgebungssensor (12; 22) selbst erzeugt wird.

2. Sensorvorrichtung (10) nach Anspruch 1, umfassend:

einen Einlass (41), um einem Einlassgasstrom ($F_{in}$) zu ermöglichen, in die Sensorvorrichtung einzutreten, wobei der Einlassgasstrom ($F_{in}$) den ersten Teil des Sensorgasstroms (F, $F_1$; $F_2$) bildet; und
einen Auslass (43), um einem Auslassgasstrom ($F_{out}$) zu ermöglichen, die Sensorvorrichtung zu verlassen, wobei der Auslassgasstrom ($F_{out}$) den zweiten Teil des Sensorgasstroms (F, $F_1$ ; $F_2$ ) umfasst,
wobei der Wärmetauscher (40) dazu ausgebildet ist, Wärme zwischen dem Einlassgasstrom ($F_{in}$) und dem Auslassgasstrom ($F_{out}$) auszutauschen, und
wobei der Wärmetauscher (40) vorzugsweise einen Einlassrohrbereich (42), der zwischen dem Einlass (41) und dem Umgebungssensor (12; 22) angeordnet ist, und einen Auslassrohrbereich (44) umfasst, der zwischen dem Umgebungssensor (12; 22) und dem Auslass (43) angeordnet ist, wobei der Auslassrohrbereich (44) den Einlassrohrbereich (42) umgibt.

3. Sensorvorrichtung (10) nach einem der vorstehenden Ansprüche,
wobei der Umgebungssensor (12) ein Partikelsensor ist, um mindestens einen Parameter zu bestimmen, der Partikeln im Sensorgasstrom (F, $F_1$; $F_2$) zugeordnet ist.

4. Sensorvorrichtung (10) nach Anspruch 3, umfassend eine Durchflusserzeugungsvorrichtung (13; 23; 33; 60), die dazu ausgebildet ist, den Sensorgasstrom (F; $F_1$; $F_2$) zu erzeugen, und eine Steuervorrichtung (50) umfasst, die dazu ausgebildet ist, Sensorsignale ($C_S$ ; $C_{S1}$ ; $C_{S2}$) vom Umgebungssensor (12; 22) zu empfangen, die Durchflusserzeugungsvorrichtung (13; 23; 33; 60) zu betreiben, um eine Änderung der Durchflussrate des Sensorgasstroms (F; $F_1$; $F_2$) zu bewirken, eine Antwort der Sensorsignale ($C_S$ ; $C_{S1}$ ; $C_{S2}$) auf die Änderung der Durchflussrate (F; $F_1$; $F_2$) zu bestimmen und ein Ausgangssignal unter Verwendung der Antwort der Sensorsignale ($C_S$ ; $C_{S1}$) abzuleiten, wobei das Ausgangssignal mindestens eines der folgenden Elemente umfasst:

ein Tröpfchenanzeigesignal ($S_{fog}$), das mindestens eine Eigenschaft verdampfbarer Tröpfchen im Sensorgasstrom (F; $F_1$; $F_2$) anzeigt, insbesondere mindestens eine der folgenden Eigenschaften: Vorhandensein, Anzahlkonzentration, Massenkonzentration und Grössen- oder Massenverteilung der verdampfbaren Tröpfchen; und

ein kompensiertes Partikelsignal ($S_{PM}$), das mindestens eine Eigenschaft von Partikeln, ausgenommen verdampfbaren Tröpfchen, im Sensorgasstrom (F; $F_1$; $F_2$) angibt, insbesondere mindestens eine der folgenden Eigenschaften: Anzahlkonzentration, Massenkonzentration und Grössen- oder Massenverteilung der Partikel, ausgenommen verdampfbarer Tröpfchen, und

wobei die Sensorvorrichtung optional ferner mindestens einen Hilfssensor (14, 24) umfasst, wobei die Steuereinrichtung (50) dazu ausgebildet ist, mindestens ein Hilfssignal von dem mindestens einen Hilfssensor (14, 24) zu empfangen und das mindestens eine Hilfssignal bei der Ableitung des Ausgangssignals berücksichtigt, wobei der mindestens eine Hilfssensor (14, 24) mindestens eines der folgenden Elemente umfasst:

einen Temperatursensor zum Bestimmen eines Temperatursignals;
einen Feuchtigkeitssensor zum Bestimmen eines Feuchtigkeitssignals; und
einen Durchflusssensor zum Bestimmen eines Durchflussratensignals.

5. Sensorvorrichtung (10), umfassend:

einen ersten Umgebungssensor (12) zum Bestimmen mindestens eines Umgebungsparameters, der einem ersten Sensorgasstrom ($F_1$) durch die Sensorvorrichtung (10) zugeordnet ist; und
einen zweiten Umgebungssensor (22) zum Bestimmen mindestens eines Umgebungsparameters, der einem zweiten Sensorgasstrom ($F_2$) durch die Sensorvorrichtung (10) zugeordnet ist, wobei der zweite Umgebungssensor (22) stromabwärts des ersten Umgebungssensors (12) angeordnet ist, so dass der zweite Sensorgasstrom ($F_2$) mindestens einen Teil des ersten Sensorgasstroms ($F_1$) stromabwärts des ersten Umgebungssensors (12) umfasst,
wobei die Sensorvorrichtung (10) dazu ausgebildet ist, den zweiten Sensorgasstrom (F; $F_1$; $F_2$) stromaufwärts des zweiten Umgebungssensors (22) unter Verwendung von durch den ersten Umgebungssensor (22) erzeugter Abwärme vorzuwärmen,
**dadurch gekennzeichnet, dass** die Sensorvorrichtung (10) einen Wärmetauscher (40) zum Austauschen von Wärme zwischen mindestens einem ersten Teil des zweiten Sensorgasstroms ($F_2$) stromaufwärts des zweiten Umgebungssensors (22) und mindestens einem zweiten Teil des zweiten Sensorgasstroms ($F_2$) stromabwärts des zweiten Umgebungssensors (22) umfasst, so dass der zweite Sensorgasstrom ($F_2$) zusätzlich mit der vom zweiten Umgebungssensor (22) erzeugten Abwärme vorgewärmt wird.

6. Sensorvorrichtung (10) nach Anspruch 5,

wobei der erste Umgebungssensor (12) ein erster Partikelsensor zum Bestimmen mindestens eines Parameters ist, der Partikeln im ersten Sensorgasstrom ($F_1$) zugeordnet ist, und
wobei der zweite Umgebungssensor (22) ein zweiter Partikelsensor zum Bestimmen mindestens eines Parameters ist, der Partikeln im zweiten Sensorgasstrom ($F_2$) zugeordnet ist.

7. Sensorvorrichtung (10) nach Anspruch 6, umfassend eine Steuervorrichtung (50), die dazu ausgebildet ist, erste Sensorsignale ($C_{S1}$) vom ersten Umgebungssensor (12) und zweite Sensorsignale ($C_{S2}$) vom zweiten Umgebungssensor (22) zu erhalten und unter Verwendung der ersten und zweiten Sensorsignale ($C_{S1}$, $C_{S2}$) ein Ausgangssignal abzuleiten,
wobei das Ausgangssignal mindestens eines der folgenden Elemente umfasst:

ein Tröpfchenanzeigesignal ($S_{fog}$), das mindestens eine Eigenschaft verdampfbarer Tröpfchen in dem ersten und/oder zweiten Sensorgasstrom ($F_1$, $F_2$) anzeigt, insbesondere mindestens eine der folgenden Eigenschaften: Vorhandensein, Anzahlkonzentration, Massenkonzentration und Grössen- oder Massenverteilung der verdampfbaren Tröpfchen; und
ein kompensiertes Partikelsignal ($S_{PM}$), das mindestens eine Eigenschaft von Partikeln, ausgenommen verdampfbaren Tröpfchen, in dem ersten und/oder zweiten Sensorgasstrom ($F_1$, $F_2$) anzeigt, insbesondere mindestens eine der folgenden Eigenschaften: eine Anzahlkonzentration, eine Massenkonzentration und eine Grössen- oder Massenverteilung der Partikel, ausgenommen verdampfbarer Tröpfchen.

8. Sensorvorrichtung (10) nach einem der Ansprüche 5 bis 7, umfassend mindestens eine Durchflusserzeugungsvorrichtung (13; 23; 33; 60), die dazu ausgebildet ist, den ersten und zweiten Sensorgasstrom ($F_1$, $F_2$) zu erzeugen, insbesondere eine einzige Durchflusserzeugungsvorrichtung (33; 60), die dazu ausgebildet ist, sowohl den ersten als auch den zweiten Sensorgasstrom ($F_1$, $F_2$) erzeugt,

wobei die Steuervorrichtung (50) dazu ausgebildet ist, die mindestens eine Durchflusserzeugungsvorrichtung (13; 23; 33; 60) zu betätigen, um eine Durchflussgeschwindigkeitsänderung mindestens einer der ersten und zweiten Sensorgasströmungen ($F_1$, $F_2$) zu bewirken und eine Antwort der ersten und/oder zweiten Sensorsignale ($C_{S1}$, $C_{S2}$) auf die Durchflussratenänderung zu bestimmen, und
wobei die Steuervorrichtung (50) dazu ausgebildet ist, die Antwort auf die Durchflussratenänderung bei der Ableitung des Ausgangssignals zu berücksichtigen.

9. Sensorvorrichtung (10) nach Anspruch 7 oder 8,

umfassend eine Heizvorrichtung (60), die dazu ausgebildet ist, den zweiten Sensorgasstrom ($F_2$) stromaufwärts des zweiten Partikelsensors (22) zu erwärmen,
wobei die Steuervorrichtung (50) dazu ausgebildet ist, die Heizvorrichtung (60) zu betreiben, um eine Änderung der Heizleistung (P) zu bewirken, und eine Antwort des ersten und/oder zweiten Sensorsignals ($C_{S1}$, $C_{S2}$) auf die Änderung der Heizleistung (P) zu bestimmen, und
wobei die Steuervorrichtung (50) dazu ausgebildet ist, die Antwort auf die Änderung der Heizleistung (P) bei der Ableitung des Ausgangssignals zu berücksichtigen.

10. Sensorvorrichtung (10) nach einem der Ansprüche 6 bis 9,

wobei der erste Partikelsensor (12) ein optischer Partikelsensor ist, der eine erste Lichtquelle (16) und einen ersten Lichtdetektor (18) umfasst,
wobei der zweite Partikelsensor (22) ein optischer Partikelsensor ist, der eine zweite Lichtquelle (26) und einen zweiten Lichtdetektor (28) umfasst,
wobei die erste und die zweite Lichtquelle (16, 26) auf einer gemeinsamen Leiterplatte (70), insbesondere auf gegenüberliegenden Seiten davon, angebracht sind, und
wobei die Leiterplatte (70) so angeordnet ist, dass der zweite Sensorgasstrom ($F_2$) stromaufwärts des zweiten Partikelsensors (22) in thermischem Kontakt mit der Leiterplatte (70) steht, vorzugsweise in thermischem Kontakt sowohl mit einer ersten Seite als auch mit einer zweiten Seite der Leiterplatte (70).

11. Verfahren zum Bestimmen mindestens eines einem Sensorgasstrom (F; $F_1$; $F_2$) zugeordneten Umgebungsparameters unter Verwendung einer Sensorvorrichtung (10), die mindestens einen Umgebungssensor (12; 22) umfasst, wobei die Sensorvorrichtung (10) vorzugsweise eine Sensorvorrichtung (10) gemäss einem der Ansprüche 1 bis 4 ist, wobei das Verfahren umfasst:

Vorwärmen des Sensorgasstroms (F; $F_1$; $F_2$) stromaufwärts des Umgebungssensors (12; 22); und
Aussetzen des Umgebungssensors (12; 22) dem vorgewärmten Sensorgasstrom (F; $F_1$; $F_2$),
wobei der Sensorgasstrom (F; $F_1$; $F_2$) unter Verwendung von Abwärme vorgewärmt wird, die durch den Umgebungssensor (12; 22) selbst erzeugt wird,
wobei das Vorwärmen den Austausch von Wärme zwischen mindestens einem ersten Teil des Sensorgasstroms (F; $F_1$; $F_2$) stromaufwärts des Umgebungssensors (12; 22) und mindestens einem zweiten Teil des Sensorgasstroms (F; $F_1$; $F_2$) stromabwärts des Umgebungssensors (12; 22) umfasst, so dass der Sensorgasstrom (F) unter Verwendung von Abwärme vorgewärmt wird, die durch den Umgebungssensor (12; 22) selbst erzeugt wird,
wobei optional der Umgebungssensor (12; 22) ein Partikelsensor ist, wobei der Umgebungsparameter mindestens ein Parameter ist, der Partikeln im Sensorgasstrom (F, $F_1$; $F_2$) zugeordnet ist, und
wobei das Verfahren optional umfasst:

Empfangen von Sensorsignalen ($C_S$; $C_{S1}$; $C_{S2}$) vom Umgebungssensor (12; 22);
Veranlassen einer Änderung der Durchflussrate des Sensorgasstroms (F; $F_1$; $F_2$);
Bestimmen einer Antwort der Sensorsignale ($C_S$; $C_{S1}$; $C_{S2}$) auf die Änderung der Durchflussrate (F; $F_1$; $F_2$); und
Ableiten eines Ausgangssignals unter Verwendung der Antwort der Sensorsignale ($C_S$; $C_{S1}$; $C_{S2}$),
wobei das Ausgangssignal mindestens eines der folgenden Elemente umfasst:

ein Tröpfchenanzeigesignal ($S_{(fog)}$), das mindestens eine Eigenschaft verdampfbarer Tröpfchen im

Sensorgasstrom (F; $F_1$; $F_2$) anzeigt, insbesondere mindestens eine der folgenden Eigenschaften: Vorhandensein, Anzahlkonzentration, Massenkonzentration und Grössen- oder Massenverteilung der verdampfbaren Tröpfchen; und

ein kompensiertes Partikelsignal ($S_{PM}$), das mindestens eine Eigenschaft von Partikeln, ausgenommen verdampfbarer Tröpfchen, im Sensorgasstrom (F; $F_1$; $F_2$) anzeigt, insbesondere mindestens eine der folgenden Eigenschaften: Anzahlkonzentration, Massenkonzentration und Grössen- oder Massenverteilung der Partikel, ausgenommen verdampfbarer Tröpfchen.

12. Verfahren zum Bestimmen mindestens eines Umgebungsparameters, der einem Sensorgasstrom (F; $F_1$; $F_2$) zugeordnet ist, unter Verwendung einer Sensorvorrichtung (10), die umfasst:

einen ersten Umgebungssensor (12) zum Bestimmen mindestens eines Umgebungsparameters, der einem ersten Sensorgasstrom ($F_1$) durch die Sensorvorrichtung zugeordnet ist; und

einen zweiten Umgebungssensor (22) zum Bestimmen mindestens eines Umgebungsparameters, der einem zweiten Sensorgasstrom ($F_2$) durch die Sensorvorrichtung zugeordnet ist,

insbesondere unter Verwendung der Sensorvorrichtung nach einem der Ansprüche 5 bis 10,

wobei das Verfahren umfasst, mindestens einen Teil des ersten Sensorgasstroms ($F_1$) dem zweiten Umgebungssensor (22) zuzuführen, so dass der zweite Sensorgasstrom ($F_2$) mindestens einen Teil des ersten Sensorgasstroms ($F_1$) stromabwärts des ersten Umgebungssensors (12) umfasst,

wobei der zweite Sensorgasstrom ($F_2$) unter Verwendung von durch den ersten Umgebungssensor (12) erzeugter Abwärme vorgewärmt wird,

wobei Wärme zwischen mindestens einem ersten Teil des zweiten Sensorgasstroms ($F_2$) stromaufwärts des zweiten Umgebungssensors (22) und mindestens einem zweiten Teil des zweiten Sensorgasstroms ($F_2$) stromabwärts des zweiten Umgebungssensors ausgetauscht wird, so dass der zweite Sensorgasstrom ($F_2$) zusätzlich mit der vom zweiten Umgebungssensor (22) erzeugten Abwärme vorgewärmt wird, und wobei der zweite Umgebungssensor (22) dem vorgewärmten zweiten Sensorgasstrom ($F_2$) ausgesetzt ist.

13. Verfahren nach Anspruch 12,

wobei der erste Umgebungssensor (12) ein erster Partikelsensor zum Bestimmen mindestens eines Parameters ist, der Partikeln im ersten Sensorgasstrom ($F_1$) zugeordnet ist, und der zweite Umgebungssensor (22) ein zweiter Partikelsensor zum Bestimmen mindestens eines Parameters ist, der Partikeln im zweiten Sensorgasstrom ($F_2$) zugeordnet ist,

wobei das Verfahren optional umfasst:

Empfangen erster Sensorsignale ($C_{S1}$) vom ersten Umgebungssensor (12);
Empfangen zweiter Sensorsignale ($C_{S2}$) vom zweiten Umgebungssensor (22); und
Ableiten eines Ausgangssignals unter Verwendung der ersten und zweiten Sensorsignale ($C_{S1}$; $C_{S2}$), wobei das Ausgangssignal mindestens eines der folgenden Elemente umfasst:

ein Tröpfchenanzeigesignal ($S_{fog}$), das mindestens eine Eigenschaft verdampfbarer Tröpfchen in den ersten und/oder zweiten Sensorgasströmen ($F_1$, $F_2$) anzeigt, insbesondere mindestens eine der folgenden Eigenschaften: Vorhandensein, Anzahlkonzentration, Massenkonzentration und Grössen- oder Massenverteilung der verdampfbaren Tröpfchen; und

ein kompensiertes Partikelsignal ($S_{PM}$), das mindestens eine Eigenschaft von Partikeln, ausgenommen verdampfbarer Tröpfchen, in dem ersten und/oder zweiten Sensorgasstrom ($F_1$, $F_2$) anzeigt, insbesondere mindestens eine der folgenden Eigenschaften: eine Anzahlkonzentration, eine Massenkonzentration und eine Grössen- oder Massenverteilung der Partikel, ausgenommen verdampfbarer Tröpfchen.

14. Verfahren nach Anspruch 12 oder 13, ferner umfassend:

Verursachen einer Durchflussratenänderung von mindestens einem der ersten und zweiten Sensorgasströme ($F_1$, $F_2$); und

Bestimmen einer Antwort der ersten und/oder zweiten Sensorsignale ($C_{S1}$; $C_{S2}$) auf die Durchflussratenänderung; und

Berücksichtigung der Durchflussratenänderung bei der Ableitung des Ausgangssignals.

**15.** Verfahren nach einem der Ansprüche 12 bis 14, umfassend:

Anlegen einer Heizleistung an den zweiten Sensorgasstrom ($F_2$), um den zweiten Sensorgasstrom ($F_2$) stromaufwärts des zweiten Partikelsensors (22) zu erwärmen,
Verursachen einer Änderung der Heizleistung;
Bestimmen einer Antwort der ersten und/oder zweiten Sensorsignale ($C_{S1}$ ; $C_{S2}$) auf die Änderung der Heizleistung; und
Berücksichtigen der Antwort auf die Änderung der Heizleistung bei der Ableitung des Ausgangssignals.

**Revendications**

**1.** Dispositif capteur (10) comprenant un capteur environnemental (12 ; 22) pour déterminer au moins un paramètre environnemental associé à un flux de gaz de capteur (F, $F_1$ ; $F_2$) à travers le dispositif capteur (10),
**caractérisé en ce que**
le dispositif capteur (10) est configuré pour préchauffer au moins une partie du flux de gaz de capteur (F ; $F_1$ ; $F_2$) en amont du capteur environnemental (12 ; 22) en utilisant la chaleur résiduelle générée par le capteur environnemental (12 ; 22) lui-même, le dispositif capteur (10) comprenant un échangeur de chaleur (40 ; 40') pour échanger de la chaleur entre au moins une première partie du flux de gaz de capteur (F ; $F_1$ ; $F_2$) en amont du capteur environnemental (12 ; 22) et au moins une deuxième partie du flux de gaz de capteur (F ; $F_1$ ; $F_2$) en aval du capteur environnemental (12 ; 22), de telle sorte que la partie du flux de gaz de capteur (F ; $F_1$ ; $F_2$) soit préchauffée à l'aide de la chaleur résiduelle générée par le capteur environnemental (12 ; 22) lui-même.

**2.** Dispositif capteur (10) selon la revendication 1, comprenant :

une entrée (41) pour permettre à un flux de gaz d'entrée ($F_{in}$) d'entrer dans le dispositif capteur, le flux de gaz d'entrée ($F_{in}$) formant la première partie du flux de gaz de capteur (F, $F_1$ ; $F_2$) ; et
une sortie (43) pour permettre à un flux de gaz de sortie ($F_{out}$) de sortir du dispositif de capteur, le flux de gaz de sortie ($F_{out}$) comprenant la deuxième partie du flux de gaz de capteur (F, $F_1$ ; $F_2$),
dans lequel l'échangeur de chaleur (40) est configuré pour échanger de la chaleur entre le flux de gaz d'entrée ($F_{in}$) et le flux de gaz de sortie ($F_{out}$), et
dans lequel l'échangeur de chaleur (40) comprend de préférence une section de tubage d'entrée (42) disposée entre l'entrée (41) et le capteur environnemental (12 ; 22) et une section de tubage de sortie (44) disposée entre le capteur environnemental (12 ; 22) et la sortie (43), la section de tubage de sortie (44) entourant la section de tubage d'entrée (42).

**3.** Dispositif capteur (10) selon l'une quelconque des revendications précédentes,
dans lequel le capteur environnemental (12) est un capteur de particules pour déterminer au moins un paramètre associé aux particules dans le flux de gaz de capteur (F, $F_1$ ; $F_2$).

**4.** Dispositif capteur (10) selon la revendication 3, comprenant un dispositif générateur de flux (13 ; 23 ; 33 ; 60) configuré pour générer le flux de gaz de capteur (F ; $F_1$ ; $F_2$ ) et comprenant un dispositif de commande (50) configuré pour recevoir des signaux de capteur ($C_S$ ; $C_{S1}$ ; $C_{S2}$) provenant du capteur environnemental (12 ; 22), pour actionner le dispositif générateur de flux (13 ; 23 ; 33 ; 60) afin de provoquer une variation du débit du flux de gaz de capteur (F ; $F_1$ ; $F_2$), pour déterminer une réponse des signaux de capteur ($C_S$ ; $C_{S1}$ ; $C_{S2}$) à la variation du débit (F ; $F_1$ ; $F_2$ ), et pour dériver un signal de sortie à l'aide de ladite réponse des signaux de capteur ($C_S$ ; $C_{S1}$ ; $C_{S2}$),
le signal de sortie comprenant au moins l'un des éléments suivants :

un signal indicateur de gouttelettes ($S_{fog}$) qui est indicatif d'au moins une propriété de gouttelettes évaporables dans le flux de gaz de capteur (F ; $F_1$ ; $F_2$), en particulier, indicatif d'au moins l'un parmi une présence, une concentration en nombre, une concentration massique et une distribution de taille ou de masse desdites gouttelettes évaporables ; et
un signal compensé de particules ($S_{PM}$) qui indique au moins une propriété des particules, à l'exclusion des gouttelettes évaporables, dans le flux de gaz de capteur (F ; $F_1$ ; $F_2$), en particulier au moins l'une parmi une concentration en nombre, une concentration massique et une distribution de taille ou de masse desdites particules, à l'exclusion de gouttelettes évaporables, et
dans lequel le dispositif capteur comprend en outre, de manière facultative, au moins un capteur auxiliaire (14, 24), dans lequel le dispositif de commande (50) est configuré pour recevoir au moins un signal auxiliaire provenant dudit au moins un capteur auxiliaire (14, 24) et pour prendre en compte ledit au moins un signal auxiliaire lors de la dérivation du signal de sortie,

l'au moins un capteur auxiliaire (14, 24) comprenant au moins l'un des éléments suivants :

un capteur de température pour déterminer un signal de température ;
un capteur d'humidité pour déterminer un signal d'humidité ; et
un capteur de débit pour déterminer un signal de débit.

5. Dispositif capteur (10) comprenant :

un premier capteur environnemental (12) pour déterminer au moins un paramètre environnemental associé à un premier flux de gaz de capteur ($F_1$) à travers le dispositif capteur (10) ; et

un deuxième capteur environnemental (22) pour déterminer au moins un paramètre environnemental associé à un deuxième flux de gaz de capteur ($F_2$) à travers le dispositif capteur (10), le deuxième capteur environnemental (22) étant disposé en aval du premier capteur environnemental (12) de telle sorte que le deuxième flux de gaz de capteur ($F_2$) comprenne au moins une partie du premier flux de gaz de capteur ($F_1$) en aval du premier capteur environnemental (12),

le dispositif capteur (10) étant configuré pour préchauffer le deuxième flux de gaz de capteur ($F ; F_1 ; F_2$) en amont du deuxième capteur environnemental (22) en utilisant la chaleur résiduelle générée par le premier capteur environnemental (22),

**caractérisé en ce que** le dispositif capteur (10) comprend un échangeur de chaleur (40) pour échanger de la chaleur entre au moins une première partie du deuxième flux de gaz de capteur ($F_2$) en amont du deuxième capteur environnemental (22) et au moins une deuxième partie du deuxième flux de gaz de capteur ($F_2$) en aval du deuxième capteur environnemental (22), de telle sorte que le deuxième flux de gaz de capteur ($F_2$) soit en plus préchauffé à l'aide de la chaleur résiduelle générée par le deuxième capteur environnemental (22).

6. Dispositif capteur (10) selon la revendication 5,

dans lequel le premier capteur environnemental (12) est un premier capteur de particules destiné à déterminer au moins un paramètre associé à des particules dans le premier flux de gaz de capteur ($F_1$), et

dans lequel le deuxième capteur environnemental (22) est un deuxième capteur de particules destiné à déterminer au moins un paramètre associé à des particules dans le deuxième flux de gaz de capteur ($F_2$).

7. Dispositif capteur (10) selon la revendication 6, comprenant un dispositif de commande (50) configuré pour obtenir des premiers signaux de capteur ($C_{S1}$) à partir du premier capteur environnemental (12) et des deuxièmes signaux de capteur ($C_{S2}$) à partir du deuxième capteur environnemental (22) et pour dériver un signal de sortie à l'aide des premiers et seconds signaux de capteur ($C_{S1}, C_{S2}$),

le signal de sortie comprenant au moins l'un des éléments suivants :

un signal indicateur de gouttelettes ($S_{fog}$) qui indique au moins une propriété de gouttelettes évaporables dans le premier et/ou deuxième flux de gaz de capteur ($F_1, F_2$), en particulier, qui indique au moins l'une parmi une présence, une concentration en nombre, une concentration massique et une distribution de taille ou de masse desdites gouttelettes évaporables ; et

un signal de particules compensé ($S_{PM}$) qui indique au moins une propriété de particules à l'exclusion de gouttelettes évaporables dans le premier et/ou deuxième flux de gaz de capteur ($F_1, F_2$), en particulier, indiquant au moins l'une parmi une concentration en nombre, une concentration massique et une distribution de taille ou de masse desdites particules à l'exclusion de gouttelettes évaporables.

8. Dispositif capteur (10) selon l'une quelconque des revendications 5 à 7, comprenant au moins un dispositif générateur de flux (13 ; 23 ; 33 ; 60) configuré pour générer les premier et deuxième flux de gaz de capteur ($F_1, F_2$), en particulier un seul dispositif générateur de flux (33 ; 60) configuré pour générer à la fois les premier et deuxième flux de gaz de capteur ($F_1, F_2$),

dans lequel le dispositif de commande (50) est configuré pour actionner l'au moins un dispositif générateur de flux (13 ; 23 ; 33 ; 60) afin de provoquer une variation du débit d'au moins l'un des premier et deuxième flux de gaz de capteur ($F_1, F_2$) et pour déterminer une réponse des premier et/ou deuxième signaux de capteur ($C_{S1}, C_{S2}$) à la variation du débit, et

dans lequel le dispositif de commande (50) est configuré pour prendre en compte ladite réponse à la variation du débit lors de la dérivation du signal de sortie.

9.  Dispositif capteur (10) selon la revendication 7 ou 8,

comprenant un dispositif de chauffage (60) configuré pour chauffer le deuxième flux de gaz de capteur ($F_2$) en amont du deuxième capteur de particules (22),
dans lequel le dispositif de commande (50) est configuré pour actionner le dispositif de chauffage (60) afin de provoquer une variation de la puissance de chauffage (P) et pour déterminer une réponse des premier et/ou deuxième signaux de capteur ($C_{S1}$ $C_{S2}$) à la variation de la puissance de chauffage (P), et
dans lequel le dispositif de commande (50) est configuré pour prendre en compte ladite réponse à la variation de la puissance de chauffage (P) lors de la dérivation du signal de sortie.

10. Dispositif capteur (10) selon l'une quelconque des revendications 6 à 9,

dans lequel le premier capteur de particules (12) est un capteur optique de particules comprenant une première source lumineuse (16) et un premier détecteur de lumière (18),
dans lequel le deuxième capteur de particules (22) est un capteur optique de particules comprenant une deuxième source lumineuse (26) et un deuxième détecteur de lumière (28),
dans lequel les première et deuxième sources lumineuses (16, 26) sont montées sur une carte de circuit imprimé commune (70), en particulier sur des côtés opposés de celle-ci, et
dans lequel la carte de circuit imprimé (70) est agencée de telle sorte que le flux de gaz du deuxième capteur ($F_2$) en amont du deuxième capteur de particules (22) soit en contact thermique avec la carte de circuit imprimé (70), de préférence en contact thermique à la fois avec un premier côté et un deuxième côté de la carte de circuit imprimé (70).

11. Procédé pour déterminer au moins un paramètre environnemental associé à un flux de gaz de capteur (F ; $F_1$ ; $F_2$) à l'aide d'un dispositif capteur (10) comprenant au moins un capteur environnemental (12 ; 22), le dispositif capteur (10) étant de préférence un dispositif de capteur (10) selon l'une quelconque des revendications 1 à 4, le procédé comprenant :

préchauffer le flux de gaz de capteur (F ; $F_1$ ; $F_2$) en amont du capteur environnemental (12 ; 22) ; et
exposer le capteur environnemental (12 ; 22) au flux de gaz de capteur préchauffé (F ; $F_1$ ; $F_2$),
dans lequel le flux de gaz de capteur (F ; $F_1$ ; $F_2$) est préchauffé à l'aide de la chaleur résiduelle générée par le capteur environnemental (12 ; 22) lui-même,
dans lequel le préchauffage comprend l'échange de chaleur entre au moins une première partie du flux de gaz de capteur (F ; $F_1$ ; $F_2$) en amont du capteur environnemental (12 ; 22) et au moins une deuxième partie du flux de gaz de capteur (F ; $F_1$ ; $F_2$) en aval du capteur environnemental (12 ; 22), de telle sorte que le flux de gaz de capteur (F) soit préchauffé à l'aide de la chaleur résiduelle générée par le capteur environnemental (12 ; 22) lui-même,
dans lequel, en option, le capteur environnemental (12 ; 22) est un capteur de particules, le paramètre environnemental étant au moins un paramètre associé à des particules dans le flux de gaz de capteur (F, $F_1$ ; $F_2$), et
dans lequel, en option, le procédé comprend :

la réception de signaux de capteur ($C_S$; $C_{S1}$; $C_{S2}$) provenant du capteur environnemental (12 ; 22) ;
provoquer une variation d'un débit du flux de gaz de capteur (F ; $F_1$ ; $F_2$) ;
déterminer une réponse des signaux de capteur ($C_S$; $C_{S1}$; $C_{S2}$) à la variation du débit (F ; $F_1$ ; $F_2$) ; et
dériver un signal de sortie en utilisant ladite réponse des signaux du capteur ($C_S$ ;$C_{S1}$ ;$C_{S2}$),
le signal de sortie comprenant au moins l'un des éléments suivants :

un signal indicateur de gouttelettes ($S_{fog}$) qui est indicatif d'au moins une propriété de gouttelettes évaporables dans le flux de gaz de capteur (F ; $F_1$ ; $F_2$), en particulier, indicatif d'au moins l'un parmi une présence, une concentration en nombre, une concentration massique et une distribution de taille ou de masse desdites gouttelettes évaporables ; et
un signal de particules compensé ($S_{PM}$) qui indique au moins une propriété de particules à l'exclusion de gouttelettes évaporables dans le flux de gaz de capteur (F ; $F_1$ ; $F_2$), en particulier, au moins l'une parmi une concentration en nombre, une concentration massique et une distribution de taille ou de masse desdites particules à l'exclusion de gouttelettes évaporables.

**12.** Procédé pour déterminer au moins un paramètre environnemental associé à un flux de gaz de capteur (F ; F$_1$ ; F$_2$) à l'aide d'un dispositif de capteur (10) comprenant :

un premier capteur environnemental (12) pour déterminer au moins un paramètre environnemental associé à un premier flux de gaz de capteur (F$_1$) à travers le dispositif de capteur ; et
un deuxième capteur environnemental (22) pour déterminer au moins un paramètre environnemental associé à un deuxième flux de gaz de capteur (F$_2$) à travers le dispositif de capteur,
en particulier, en utilisant le dispositif capteur de l'une quelconque des revendications 5 à 10,
le procédé comprenant l'alimentation d'au moins une partie du premier flux de gaz de capteur (F$_1$) vers le deuxième capteur environnemental (22) de telle sorte que le deuxième flux de gaz de capteur (F$_2$) comprenne au moins une partie du premier flux de gaz de capteur (F$_1$) en aval du premier capteur environnemental (12),
dans lequel le flux de gaz du deuxième capteur (F$_2$) est préchauffé à l'aide de la chaleur résiduelle générée par le premier capteur environnemental (12),
dans lequel la chaleur est échangée entre au moins une première partie du flux de gaz du deuxième capteur (F$_2$) en amont du deuxième capteur environnemental (22) et au moins une deuxième partie du flux de gaz du deuxième capteur (F$_2$) en aval du deuxième capteur environnemental, de telle sorte que le flux de gaz du deuxième capteur (F$_2$) est en plus préchauffé à l'aide de la chaleur perdue générée par le deuxième capteur environnemental (22), et

dans lequel le deuxième capteur environnemental (22) est exposé au deuxième flux de gaz de capteur préchauffé (F$_2$).

**13.** Procédé selon la revendication 12,

dans lequel le premier capteur environnemental (12) est un premier capteur de particules destiné à déterminer au moins un paramètre associé à des particules dans le premier flux de gaz de capteur (F$_1$) et le deuxième capteur environnemental (22) est un deuxième capteur de particules destiné à déterminer au moins un paramètre associé à des particules dans le deuxième flux de gaz de capteur (F$_2$),
dans lequel, en option, le procédé comprend :

recevoir de premiers signaux de capteur (C$_{S1}$) provenant du premier capteur environnemental (12) ;
recevoir de deuxièmes signaux de capteur (C$_{S2}$) provenant du deuxième capteur environnemental (22) ; et
dériver un signal de sortie à l'aide des premiers et seconds signaux de capteur (C$_{S1}$ ; C$_{S2}$), le signal de sortie comprenant au moins l'un des éléments suivants :

un signal indicateur de gouttelettes (S$_{fog}$) qui est indicatif d'au moins une propriété de gouttelettes évaporables dans le premier et/ou deuxième flux de gaz de capteur (F$_1$, F$_2$), en particulier, indicatif d'au moins l'un parmi une présence, une concentration en nombre, une concentration massique et une distribution de taille ou de masse desdites gouttelettes évaporables ; et
un signal de particules compensé (S$_{PM}$) qui indique au moins une propriété de particules à l'exclusion de gouttelettes évaporables dans le premier et/ou deuxième flux de gaz de capteur (F$_1$, F$_2$), en particulier, indiquant au moins l'une parmi une concentration en nombre, une concentration massique et une distribution de taille ou de masse desdites particules à l'exclusion de gouttelettes évaporables.

**14.** Procédé selon la revendication 12 ou 13, comprenant en outre :

provoquer une variation du débit d'au moins l'un des premier et deuxième flux de gaz de capteur (F$_1$, F$_2$) ; et
déterminer une réponse des signaux des premier et/ou deuxième capteurs (C$_{S1}$ ; C$_{S2}$) à la variation de débit ; et
prendre en compte la variation du débit lors de la dérivation du signal de sortie.

**15.** Procédé selon l'une quelconque des revendications 12 à 14, comprenant :

appliquer une puissance de chauffage au deuxième flux de gaz de capteur (F$_2$) afin de chauffer le deuxième flux de gaz de capteur (F$_2$) en amont du deuxième capteur de particules (22),
provoquer une variation de la puissance de chauffage ;
déterminer une réponse des signaux du premier et/ou du deuxième capteur (C$_{S1}$ ; C$_{S2}$) à la variation de la puissance de chauffage ; et
prendre en compte ladite réponse à la variation de la puissance de chauffage lors de la dérivation du signal de

sortie.

FIG. 1

FIG. 2

FIG. 3

FIG. 4

FIG. 5

FIG. 6

FIG. 7

FIG. 8

**FIG. 9**

**FIG. 10**

90

$F_D$

$F_{out}$ $F_{in}$ 41

$F_W$ 43 92

91 42

40

44

30

50

10

33

**FIG. 11**

41 43

$F_W$

**FIG. 12**

41 43

$F_W$

**FIG. 13**

41 43

$F_W$

**FIG. 14**

41 43

$F_W$

**FIG. 15**

**FIG. 16**

**FIG. 17**

**FIG. 18A**

**FIG. 18B**

**FIG. 19**

**FIG. 20**

FIG. 21

FIG. 22

105  101  102

| PM | | μP | | RAM |

Aux. sensor

I/O

Fan

Heater

Com

103

ROM

104

106

**FIG. 23**

Operate sensors — 201

Determine PM concentrations — 202

Derive fog indicator — 203

Derive compensated PM signal — 204

Output fog indicator — 205

Output compensated PM signal — 206

Change heater power — 207

Change fan speed — 208

**FIG. 24**

**EP 4 320 420 B1**

REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008140816 A1
- WO 2017054098 A1
- WO 2018100209 A2
- WO 2019115689 A1